# EUROPÄISCHE PATENTSCHRIFT

(11) **EP 2 935 509 B1**
(45) Veröffentlichungstag und Bekanntmachung des Hinweises auf die Patenterteilung: **22.05.2019**
(21) Anmeldenummer: 13811530.8
(22) Anmeldetag: 19.12.2013
(51) Int. Cl.: C09K 9/02, C08L 25/14, C08L 33/14

(54) **THERMOTROPE KUNSTSTOFFE**
THERMOTROPIC POLYMERS
PLASTIQUES THERMOTROPES

(30) Priorität: 21.12.2012 EP 12198837
(43) Veröffentlichungstag der Anmeldung: 28.10.2015
(73) Patentinhaber: Quarzwerke GmbH, 50226 Frechen (DE)
(72) Erfinder: ZILLES, Jörg Ulrich, 50677 Köln (DE); KRUBER, Dirk, 53347 Alfter (DE); SEEBOTH, Arno, 12557 Berlin (DE); MÜHLING, Olaf, 50226 Frechen (DE); RUHMANN, Ralf, 12621 Berlin (DE)
(74) Vertreter: dompatent von Kreisler Selting Werner - Partnerschaft von Patent- und Rechtsanwälten mbB
(86) Internationale Anmeldenummer: PCT/EP2013/077443
(87) Internationale Veröffentlichungsnummer: WO 2014/096222

(56) Entgegenhaltungen:
- EP-B1- 1 258 504
- EP-B1- 1 572 769
- WO-A1-2012/110443

## Beschreibung

Die vorliegende Erfindung betrifft thermotrope Formmassen und Verfahren zu ihrer Herstellung. Insbesondere betrifft die Anmeldung Polymerpartikel mit temperaturabhängigem Brechungsindex, Verfahren zu ihrer Herstellung sowie die Verwendung dieser Polymerpartikel als Additive zur Herstellung thermotroper Kunststoffe. Ferner betrifft die Erfindung Verfahren zur Herstellung thermotroper Kunststoffe und ihre Verwendung.

Thermotrope Materialien verändern bei Temperaturänderung reversibel ihr Streuverhalten für elektromagnetische Strahlung. Thermotrope Materialien haben in einem bestimmten Temperaturbereich eine hohe Lichtdurchlässigkeit oder sind transparent, das heißt sie zeigen keine oder nur minimale Lichtstreuung. Dieser Zustand wird im Folgenden auch als off-Modus bezeichnet. Entweder beim Über- oder Unterschreiten dieses Temperaturbereichs wird eine Zunahme der Lichtstreuung beobachtet. Der resultierende trübe Zustand wird nachfolgend auch als on-Modus bezeichnet. Thermotropie ist ein reversibler Prozess: Mit Erreichen der Ausgangstemperatur kehren thermotrope Materialien in ihren ursprünglichen Zustand zurück. Je nach Richtung des Schaltvorgangs kann zwischen positiver (Zunahme der Trübung mit steigender Temperatur) und negativer Thermotropie (Abnahme der Trübung mit steigender Temperatur) unterschieden werden. Positiv thermotrope Materialien sind von besonderem Interesse, da sie zum Beispiel in Verglasungen von Gebäuden, Gewächshäusern oder Solarkollektoren als Abschattungselemente zur temperaturabhängigen Regulierung des Strahlungseinfalls eingesetzt werden können.

Die Streuung elektromagnetischer Strahlung erfolgt an separaten Domänen, die sich in einem geeigneten Matrixmaterial befinden. Damit Streuung auftreten kann, müssen Domäne und Matrix über unterschiedliche Brechungsindizes verfügen. Allgemein gilt, dass die Streuung dann besonders intensiv ist, wenn a) die Brechungsindexdifferenz zwischen Domäne und Matrix möglichst groß ist, b) der Volumenanteil der Streudomänen hoch ist und c) die Domänen in etwa die Größe der Wellenlänge der elektromagnetischen Strahlung besitzen. In Hinblick auf eine Anwendung thermotroper Materialien als Abschattungselement (z.B. in Gebäudefassaden) ist nicht die Gesamtstreuung, sondern der Rückstreuanteil die maßgebliche Größe, da im trüben Zustand möglichst viel Energie reflektiert, also in den rückwärtigen Halbraum gestreut werden soll. Eine maximale Rückstreueffizienz wird erreicht, wenn der Durchmesser der Streudomänen knapp unterhalb der Lichtwellenlänge liegt. Optimale Rückstreueigenschaften für Solarstrahlung (AM 1.5 Global) ergeben sich bei Durchmessern von d = 200 bis 400 nm (P.M. Nitz, "Optische Modellierung und Vermessung thermotroper Systeme", Dissertation, Albert-Ludwigs-Universität Freiburg, 1999). Allerdings ist dieses Optimum hin zu größeren Durchmessern sehr breit, so dass auch mit Domänen im Größenbereich von ca. 400 bis 2000 nm vergleichbar gute Rückstreueigenschaften erzielt werden können.

Bezüglich des Schaltmechanismus können nach dem Stand der Technik zwei Konzepte (A und B) für positiv thermotrope Materialien unterschieden werden:
Beim Konzept A beruht das optische Schalten auf reversiblen Entmischungs- und Mischungsvorgängen. Derartige Systeme bestehen aus mindestens zwei Komponenten mit unterschiedlichem Brechungsindex. Im off-Modus kommt der Brechungsindexunterschied zwischen diesen Komponenten nicht zum Tragen, da sie auf molekularer Ebene homogen miteinander vermischt sind. Das Material verfügt dann über einen mittleren Brechungsindex und ist idealerweise hochtransparent. Bei Überschreiten einer bestimmten Temperatur - der unteren kritischen Lösungstemperatur (LCST) - tritt Phasenseparation auf. Es bilden sich Streudomänen aus, die überwiegend oder vollständig aus einer der Komponenten bestehen. Da sich nun der Brechungsindex der Streudomänen von dem der umgebenden Matrix unterscheidet, tritt Streuung an der Grenzfläche Domäne/Matrix auf und das Material erscheint trüb. Beim Abkühlen unterhalb der LCST mischen sich die Komponenten wieder und die Streudomänen verschwinden, wodurch das Material in seinen ursprünglichen transparenten Zustand zurückkehrt.

Bei thermotropen Materialen nach Konzept A, die sich für Verglasungselemente eignen, handelt es sich entweder um Hydrogele (Wasser/Polymer-Gemische) oder Polymerblends (Gemische aus mindestens zwei Polymeren). Derartige LCST-Systeme sind vielfach in der Patentliteratur dokumentiert. Für thermotrope Hydrogele seien beispielhaft genannt: US 5,057,560, US 5,147,923, EP 0 678 534 und EP 0 873 367. Thermotrope Polymerblends werden zum Beispiel in EP 0 611 803 und EP 0 181 485 beschrieben.

Thermotrope LCST-Systeme haben zahlreiche Nachteile:
- Entmischungs-/Mischungsvorgänge setzen eine hohe Beweglichkeit auf molekularer Ebene voraus. Nach mehreren Schaltzyklen kann partielle makroskopische Entmischung auftreten, was zu permanenten Eintrübungen führt. Eine dauerhafte und vollständige Reversibilität kann so nicht gewährleistet werden.
- Da bereits kleinste Änderungen in der Zusammensetzung das Phasenverhalten beeinflussen, reagieren LCST-Systeme sehr sensibel auf Verunreinigungen. So sind beispielsweise thermotrope Polymerblends sehr feuchtigkeitsempfindlich.
- Aufgrund der erforderlichen molekularen Beweglichkeit zeigen LCST-Systeme keine für Kunststoffe typischen Gebrauchseigenschaften. Sie funktionieren nicht als eigenständige, selbsttragende Systeme. LCST-Systeme werden deshalb in Verbindung mit einer Träger- und einer Deckschicht verwendet, die vorzugsweise aus Glas oder einem transparenten Kunststoff besteht. Die Integration des thermotropen Materials zwischen zwei Schichten ist in der Regel mit einem hohen technologischen Aufwand verbunden. Bei thermotropen Hydrogelen ist zusätzlich ein Randverbund notwendig, der Wasserverluste verhindert. Umfassende Tests haben indes gezeigt, dass eine Diffusionsdichtigkeit des Randverbunds gegenüber Wasser für Zeiträume von mehr als zehn Jahren kaum zu beherrschen ist.
- Thermotrope Hydrogele können aufgrund des Wassergehalts nicht thermoplastisch verarbeitet werden. Eine Extrusion thermotroper Polymerblends gestaltet sich schwierig, da die einzelnen Polymerkomponenten in der Regel über deutlich unterschiedliche Viskositäten verfügen. Hinzu kommt, dass die Verarbeitungstemperatur oberhalb der Schalttemperatur des Polymerblends liegt. Nach der Extrusion wird keine homogene Polymermischung erhalten mit der Konsequenz, dass die Trübung irreversibel ist, das heißt auch bei Temperaturen unterhalb der Schalttemperatur bestehen bleibt. Für die Extrusionsherstellung von Mehrschichtfolien mit einer thermotropen Polymerblend-Zwischenschicht werden in EP 1 218 467 geeignete Hilfsmittel (z.B. organische Lösemittel) zugesetzt. Damit kann die Entmischungstemperatur zwar soweit erhöht werden, dass sie oberhalb der Verarbeitungstemperatur liegt. Allerdings müssen diese Hilfsmittel in einem zusätzlichen Verfahrensschritt wieder rückstandsfrei entfernt werden, da bereits kleinste Verunreinigungen das Phasenverhalten des thermotropen Polymerblends negativ beeinflussen können.
- LCST-Systeme sind in der Regel weder unter thermischer Belastung noch im Sonnenlicht dauerhaft haltbar. Als Schadensbild werden permanente Eintrübungen, eine Abnahme des Schalthubs, eine Zunahme der Hysterese und Vergilbungen festgestellt. Stabilisatoren, wie Radikalfänger und Lichtschutzmittel, bleiben häufig unwirksam und können zudem das Phasenverhalten negativ beeinflussen.
- LCST-Systeme reagieren träge auf Temperaturveränderungen, da die notwendigen Diffusionsvorgänge langsam ablaufen. So kann insbesondere der Übergang vom trüben on-Modus in den klaren off-Modus mehrere Stunden, bisweilen sogar Tage dauern.

In thermotropen Materialien nach Konzept B sind keine Entmischungs-/Mischungsvorgänge involviert. Hier wird die Transmissionsänderung durch unterschiedliche Temperaturabhängigkeiten der Brechungsindizes der beteiligten Komponenten hervorgerufen. Thermotrope Materialien nach Konzept B bestehen ebenfalls aus mindestens zwei Komponenten: einem Domänen-bildenden Additiv und einem transparenten Polymer als Matrix. Im off-Modus stimmen die Brechungsindizes der Domänen und der Matrix bestmöglich überein, so dass eine hohe Transparenz erreicht wird. Mit Temperaturerhöhung wird eine deutliche Abnahme des Domänen-Brechungsindex beobachtet, wohingegen der Brechungsindex der Matrix nahezu konstant bleibt. Dadurch wechselt das System in einen lichtstreuenden, trüben Zustand. Um eine signifikante, möglichst sprunghafte Änderung des Brechungsindex mit der Temperatur zu erreichen, werden als Domänenbildner (thermotrope Additive) vorzugsweise Materialen eingesetzt, die im Bereich der Schalttemperatur einen Phasenübergang zeigen.

In EP 0 000 868, DE 44 33 090, EP 0 946 443, DE 198 25 984 und EP 1 258 504 werden niedermolekulare organische Substanzen als thermotropes Additiv verwendet, die im Bereich der Schalttemperatur einen Schmelzübergang zeigen. Damit sich Domänen in der jeweiligen transparenten Polymermatrix ausbilden können, muss das thermotrope Additiv in der Polymermatrix mindestens teilweise unlöslich sein. Als geeignete niedermolekulare Substanzklassen werden Alkane, Carbonsäuren, deren Ester und Amide sowie vergleichbare Verbindungsklassen genannt. Das thermotrope Additiv wird pur - also "ungeschützt" - eingearbeitet. Das bringt einige Nachteile mit sich: Das thermotrope Additiv ist in der Regel nur innerhalb eines bestimmten Konzentrationsbereichs (z.B. 2 - 5 %) als Thermotrop wirksam. Unterhalb dieses Konzentrationsbereichs ist es vollständig löslich und bildet keine Domänen aus, das heißt Additiv und Matrix liegen als einheitliche Phase vor. Wichtige Materialeigenschaften der Polymermatrix (beispielsweise das Adhäsionsvermögen an Glas oder einem vergleichbaren Träger) können dadurch beeinträchtigt werden. Die Domänenbildung setzt erst oberhalb einer bestimmten Additivkonzentration ein, die je nach Matrix stark variieren kann. Bei hohen Additivkonzentrationen besteht hingegen die Gefahr, dass permanente Streueffekte über den gesamten Temperaturbereich auftreten. Die thermotrope Schalteigenschaft würde damit weitgehend verloren gehen. Ein weiterer Nachteil betrifft die zu erwartende Langzeitstabilität: Im lichtstreuenden on-Modus ist das thermotrope Additiv flüssig und kann somit leicht Diffusionsprozessen unterliegen. Ein Verlust des Schalteffekts und permanente Streueffekte sind die Folge.

Zur Herstellung thermotroper Schichten mit niedermolekularen organischen Substanzen als thermotropes Additiv werden verschiedene Verfahren vorgeschlagen: In EP 0 946 443 wird zunächst eine lösemittelhaltige Beschichtungslösung hergestellt, die mit Hilfe bekannter lacktechnischer Beschichtungsverfahren (wie z.B. Rakeln, Spritzen oder Fluten) auf ein Substrat (z.B. Floatglas) aufgetragen wird. Im Anschluss wird das Lösemittel abgedampft und eine thermisch induzierte Vernetzung durchgeführt. Beim Abdampfen des Lösemittels werden umwelt- und gesundheitsschädigende Dämpfe freigesetzt. Erhöhte Investitionskosten für die Arbeitssicherheit sind erforderlich. Aus DE 198 25 984 ist die Herstellung thermotroper Verbundglasscheiben auf Basis UV-härtender Gießharzformulierungen bekannt. Die thermotropen Harze werden in einen Scheibenzwischenraum gefüllt, der durch Verkleben zweier Glasscheiben mit einem geeigneten Abstandshalter erhalten wird. Durch Bestrahlung mit UV-Licht wird das thermotrope Harz ausgehärtet. In Abwandlung dieser Methode wird in EP 1 258 504 ein Verfahren zur Herstellung thermotroper Folien beansprucht. Nach dem Aushärten werden die beiden Trägerscheiben durch Entfernen des Abstandshalters wieder voneinander gelöst. Auf diese Weise kann eine thermotrope Folie isoliert werden. Damit sich die Folie leicht abtrennen lässt, besteht die Trägerscheibe beispielsweise aus einem Material mit geringen Adhäsionseigenschaften (z.B. PTFE, Silikon). Zusätzlich wird in EP 1 258 504 ein Verfahren beschrieben, bei der eine lösemittelfreie UV-härtende Formulierung mit einer Foliengießapparatur auf eine plane Trägerfläche aufgetragen wird. Nach dem UV-Aushärten unter Luftausschluss resultiert eine thermotrope Folie, die von der Trägerschicht abgetrennt werden kann. Zusammenfassend lässt sich feststellen, dass keines der genannten Verfahren die Anforderungen an eine wirtschaftliche Herstellung im großindustriellen Maßstab erfüllt.

In der wissenschaftlichen Literatur (Solar Energy Materials & Solar Cells, 93, 2009, S. 1510-1517) wird eine Weiterentwicklung beschrieben, bei der die niedermolekulare Komponente nicht pur, sondern in Form von Kern/Schale-Partikeln in die Polymermatrix eingearbeitet wird. Die niedermolekulare Komponente - ein n-Alkangemisch mit einer Schmelztemperatur zwischen 30 und 40°C - bildet dabei den Kern und wird von einer schützenden Polymerschale ummantelt. Durch Verkapselung der niedermolekularen Komponente wird ein pulverartiges Material erhalten, das im Bereich der Gebrauchstemperatur immer als Feststoff vorliegt und verglichen mit dem ungeschützten Additiv deutlich leichter verarbeitet werden kann. Die Polymerschale unterbindet Diffusionsprozesse, so dass die Langzeitstabilität maßgeblich verbessert wird. Die Technologie zur Herstellung von Gießharzverbundglas ist etabliert, eignet sich jedoch nicht für großflächige Anwendungen. Eine Übertragung dieses Konzepts auf gängige thermoplastische Verarbeitungsverfahren, wie z.B. Folienextrusion, wird unter anderem in DE 10 2007 061 513 beschrieben.

Aus EP 0 985 709 sind thermotrope Kunststoffformmassen bekannt, bei denen anstelle von niedermolekularen Substanzen spezielle Copolymerisate als thermotrope Komponente eingesetzt werden. Die verwendeten Copolymerisate sind mit dem Matrixpolymer thermodynamisch nicht mischbar und bilden deshalb nach thermoplastischer Verarbeitung Domänen innerhalb der Polymermatrix aus. Da die thermotrope Komponente gegenüber der Matrix eine höhere Temperaturabhängigkeit des Brechungsindex zeigt, trübt die resultierende thermotrope Formmasse mit Temperaturerhöhung reversibel ein. Als thermotrope Komponente werden vorzugsweise Ethylen-Glycidylmethacrylat- oder Ethylen-Alkylacrylat(C1-4)-Glycidylmethacrylat-Copolymere (wie beispielsweise die Lotader® GMA-Typen von Arkema) und Methacrylat-Butadien-Styrol-Copolymere (wie beispielsweise die Paraloid® BTA-Typen von Rohm & Haas) eingesetzt. Die transparente Polymermatrix besteht vorzugsweise aus amorphen Polyamiden oder Copolyamiden (wie beispielsweise die Grilamid® TR-Typen von EMS Grivory). Durch Compoundieren werden die beiden Komponenten zu einer thermotropen Formmasse zwangsgemischt. Für die Weiterverarbeitung zu Formkörpern können alle gängigen Thermoformprozesse angewendet werden, wie beispielsweise Spritzguss, Spritzblasen und Extrusion. In einem Ausführungsbeispiel wird ein transparentes Polyamid als Matrixkomponente mit einem Ethylen-Glycidylmethacrylat-Copolymer (Lotader® GMA AX 8840) als Domänenbildner compoundiert und nach dem Spritzgussverfahren zu Platten (100 x 100 x 4 mm) verarbeitet. Die so präparierten thermotropen Polyamidplatten zeigen mit steigender Temperatur (Raumtemperatur → 80°C) eine nahezu kontinuierliche Abnahme der Transmission bei 560 nm. Der Grad der Eintrübung im on-Modus nimmt mit steigender Konzentration des thermotropen Additivs erwartungsgemäß zu. Nachteilig ist, dass mit steigender Additivkonzentration auch die Transmission im off-Modus signifikant abnimmt, so dass der effektive "Schalthub" (Transmissionsunterschied zwischen off- und on-Modus) gering ist. Dieser nachteilige Effekt tritt bereits bei relativ niedrigen Additivkonzentrationen (< 10%) auf, was auf eine unzureichende Abstimmung der Brechungsindizes von Additiv und Matrix hindeutet. Ein hoher Volumenanteil an Streudomänen, wie er für eine hohe Streuintensität im on-Modus erforderlich ist, bei gleichzeitig hoher Transparenz im off-Modus kann damit nicht erreicht werden. Aufgrund des sehr breiten Schaltbereichs (Raumtemperatur → 80°C) eignen sich diese Systeme nicht für Anwendungen wie zum Beispiel den Gebäudeüberhitzungsschutz, bei denen ein enger Schalttemperaturbereich von ca. 25 - 40°C oder 30°C bis 40°C gefordert wird. Das beschriebene Verfahren lässt es zudem nicht zu, gezielt Einfluss auf die Domänengröße zu nehmen. Eine Optimierung der Streueigenschaften (z.B. hinsichtlich Rückwärtstreuanteil) ist demzufolge nicht möglich.

WO 2012/110443 beschreibt Mikrokapseln mit einer Paraffinzusammensetzung als Kapselkern.

Aufgabe der vorliegenden Erfindung war es, thermotrope Formmassen bereitzustellen, die zumindest einige der genannten Nachteile des Standes der Technik überwinden.

Offenbart wird die Bereitstellung von Partikeln, die als thermotropes Additiv dienen können. Diese Partikel sind erhältlich durch Copolymerisation von
a. 30 bis 95 Gew.-% eines oder mehrerer Vinylmonomere mit einer unverzweigten Alkylseitenkette von mindestens 12 C-Atomen
b. 0,1 bis 10 Gew.-% eines oder mehrerer Vernetzer,
c. 3 bis 70 Gew.-% eines oder mehrerer Vinylmonomere mit 1 bis 11 C-Atomen in einer aliphatischen Seitenkette, die optional eine oder mehrere funktionelle Gruppen umfasst,
d. 0 bis 50 Gew.-% eines oder mehrerer Vinylmonomere mit einer aromatischen Seitengruppe, die gegebenenfalls substituiert ist.

Es wird so ein Partikel erzeugt, bei dem Vinylmonomere mit einer langen aliphatischen Seitenkette, bei der die Anzahl der C-Atome 12 oder mehr beträgt mit Vinylmonomeren, deren aliphatische Seitenkette 1 bis 11 C-Atomen umfasst, optional eine oder mehrere funktionelle Gruppen umfassen kann, polymerisiert wird. Die eingesetzten Komponenten a. sind hingegen unsubstituiert. Zur Polymerisation werden ein oder mehrere Radikalstarter benötigt.

Weiterhin können Vinylmonomere vorhanden sein, die aromatische Seitengruppen umfassen, wobei die aromatischen Seitengruppen substituiert sein können.

Vinylmonomer bedeutet Verbindungen der allgemeinen Formel -CH₂=CR₁R₂. In vielen Fällen ist R₂=H und R₁ umfasst die Seitenkette gegebenenfalls über eine funktionelle Gruppe.

Dem Fachmann sind verschiedene Vinylmonomere bekannt. Besonders geeignete Vinylmonomere für das erfindungsgemäße Verfahren sind Acrylate. In der oben genannten Formel ist R₂ dann -C(=O)OR₃ und R₁ = H. In Methacrylaten entspricht das R₂ der oben genannten Formel -C(=O)OR₃ und R₁ einer Methylgruppe. Weitere geeignete Verbindungen sind Acrylamide, in denen R₂ -C(=O)-NHR₃ ist; Vinylether, in denen R₂ -O-R₃ ist und z.B. Vinylester, in denen R₂ der obigen Formel -O-C(=O)-R₃ ist.

R₃ entspricht dann der in a., c. und d. definierten Seitenkette/Seitengruppe.

Dem Fachmann sind weitere Vinylmonomere bekannt.

Für die Definition der Komponente a. ist R₃ eine unverzweigte Alkylgruppe, also acyclisch und gesättigt. Bevorzugte Kettenlängen liegen zwischen 12 und 48 C-Atomen.

Als Komponente b. werden Verbindungen eingesetzt, die mindestens zwei Gruppen aufweisen, die mit den Vinylmonomeren reagieren können. Besonders geeignet sind als Vernetzer oder Vernetzermischung werden zwei- oder mehrfach ethylenisch ungesättigte Vinylmonomere.

Für die Komponente c. umfasst die Gruppe R₃ 1 bis 11 C-Atome eines Aliphaten. Auch diese können grundsätzlich acyclisch oder cyclisch sowie teilweise ungesättigt sein. In diesem Fall kann R aber mehrere funktionelle Gruppen umfassen, beipielsweise Hydroxygruppen, Ester, Ether, Amide, Amine, Halogene, Carboxygruppen und Kombinationen. Beispielsweise konnte Komponente c. im Rest R₂ eine oder zwei oder drei Hydroxygruppen umfassen. R könnte auch eine, zwei oder drei Estergruppen umfassen. Möglich wäre aber auch eine Kombination einer Hydroxygruppe und eines Halogenids. Auch Mischungen verschiedener Vinylmonomere, die die Bedingungen von c. erfüllen, sind geeignet.

Als optionale Komponente kann als Komponente d. ein Vinylmonomer enthalten sein, bei dem R₃ eine aromatische Seitengruppe ist. Aromatische Moleküle besitzen ein Ringsystem, das delokalisierte Elektronen in konjugierten Doppelbindungen oder unbesetzte p-Orbitale oder freie Elektronenpaare umfasst. Bevorzugte Verbindungen dieses Typs sind Phenylverbindungen. Diese können substituiert sein, bevorzugt mit Halogenen. Bevorzugt ist die Verwendung von elektronenreichen Heteroaromaten.

In einer Offenbarung ist auf dem Partikel eine weitere Schicht aufgepfropft, die durch Polymerisation von Vinylmonomeren mit 1 bis 11 C-Atomen in einer aliphatischen oder aromatischen Seitenkette erhalten werden, d.h. R₃ ist in diesem Fall Aliphat oder Aromat mit 1 bis 11 C-Atomen.

Zum Aufpfropfen einer weiteren Schicht werden zwei- oder mehrfach funktionelle Vernetzer mit mindestens zwei unterschiedlich reaktiven C-C-Doppelbindungen verwendet.

Die Partikel zeigen einen Phasenübergang erster Ordnung im Temperaturbereich von -20 bis 150°C.

Die Partikel werden bevorzugt mit einem mittleren Partikeldurchmesser von 100 bis 10000, oder 100 bis 2000 nm, bevorzugt 100 bis 500 nm hergestellt. Der mittleren Partikeldurchmesser d50 ist der Wert, bei dem 50 Gew.-% aller Partikel schwerer sind als der angegebene Wert und 50% leichter sind als der angegebene Wert. Solche d50 Werte werden beispielsweise durch Laserbeugung ermittelt.

Es ist bevorzugt, dass die Partikel eine relativ enge Verteilung haben. So liegt bevorzugt der Partikeldurchmesser d90 Wert bei maximal dem dreifachen des d50 Werts. Ist also beispielsweise der d50 Wert 200 nm, liegt der d90 Wert vorzugsweise bei 600 nm oder weniger. Bevorzugt ist das Verhältnis von d90 zu d50 Wert also ≤ 3, bevorzugt ≤ 2.

Die Partikel können weiterhin 0 bis 10 Gew.-% anorganische Partikel enthalten. Besonders geeignete Partikel sind Silikate und Oxide der Elemente AI, Si, Zr, Hf, Ti, Zn, Pb sowie deren mögliche Mischoxide.

Offenbart ist auch eine Formmasse enthaltend eine Matrix und 1 bis 50 Gew.-% der erfindungsgemäßen Partikel oder Partikel, die zumindest durch die Komponenten a. und b. definiert werden, also:
Partikeln erhältlich durch Polymerisation von
a. 30 bis 99,9 Gew.-% eines oder mehrerer Vinylmonomere mit einer Alkylseitenkette mit mindestens 12 C-Atomen,
b. 0,1 bis 10 Gew.-% eines oder mehrerer Vernetzer,
c. 0 bis 70 Gew.-% eines oder mehrerer Vinylmonomere mit 1 bis 11 C-Atomen in einer aliphatischen Seitenkette, die optional eine oder mehrere funktionelle Gruppen umfasst,
d. 0 bis 50 Gew.-% eines oder mehrerer Vinylmonomere mit einer aromatischen Seitengruppe, die gegebenenfalls substituiert ist.

Eine solche Formmasse ist dann eine thermotroper Formmasse, sie die Lichtdurchlässigkeit unter Wärmeeinwirkung ändern kann.

Zwischen den Partikeln und dem Matrixmaterial liegen der Unterscheid der Brechungsindices bevorzugt bei <0,5, oder <0,3 oder <0,2 oder <0,1 oder <0,05 oder <0,01, bezogen auf den lichtdurchlässigen Zustand.

Durch Wahl der Komponenten a. bis d. im Partikel kann der Brechungsindex gesteuert werden.

Bevorzugt ist dafür das Matrixmaterial selbst transparent oder transluzent. Im Rahmen der Erfindung wird unter Transparenz Lichtdurchlässigkeit bei gleichzeitiger Blick- oder Bilddurchlässigkeit verstanden. In Abgrenzung zur Transparenz bedeutet Transluzenz Lichtdurchlässigkeit ohne Blick- oder Bilddurchlässigkeit.

Definiert werden transparente und transluzente Formkörper durch eine Tvisₙₕ von 75%, bevorzugt 80%, unter den Messbedingungen, wie es die in den Beispielen für die optische Charakterisierung angegeben sind, mit Probekörpern analog zu Bespiel 6.

In einer Ausführungsform der Erfindung wird die Aufgabe gelöst durch Polymerpartikel mit einem mittleren Primärpartikeldurchmesser zwischen 50 nm und 10 µm, vorzugsweise zwischen 100 und 2000 nm, insbesondere zwischen 200 und 1000 nm oder 500 bis 1000 nm enthalten, bezogen auf ihr Gesamtgewicht
A) 10 bis 100 Gew.-% einer Polymerphase A, erhältlich durch radikalische Copolymerisation einer Öl-in-Wasser-Miniemulsion mit einer Monomermischung als Ölphase enthaltend
   i) 30 bis 99,9 Gew.-% eines oder mehrerer einfach ethylenisch ungesättigter Monomere I mit wenigstens einer C12-C48-n-Alkylseitenkette,
   ii) 0 bis 60 Gew.-% eines oder mehrerer einfach ethylenisch ungesättig-ter Monomere II mit wenigstens einer C1-C11-n-Alkyl- und/oder einer C3-C48-i-Alkylseitenkette,
   iii) 0,1 bis 20 Gew.-% eines oder mehrerer Monomere III mit wenigstens zwei nicht konjugierten ethylenischen Doppelbindungen,
   iv) 0 bis 69,9 Gew.-% eines oder mehrerer (hetero)aromatischer, einfach ethylenisch ungesättigter Monomere IV,
   v) 0 bis 40 Gew.-% eines oder mehrerer sonstiger, einfach ethylenisch ungesättigter Monomere V,
      und
B)0 bis 90 Gew.-% einer Polymerphase B, erhältlich durch anschließende radikalische Pfropfcopolymerisation in Gegenwart der nach Stufe A) erhaltenen Polymerphase A einer Monomermischung enthaltend
   i) 0 bis 100 Gew.-% eines oder mehrerer Monomere VI aus der Gruppe der C1-C10-Alkyl(meth)acrylate,
   ii) 0 bis 100 Gew.-% eines oder mehrerer (hetero)aromatischer, einfach ethylenisch ungesättigter Monomere VII,
   iii) 0 bis 50 Gew.-% eines oder mehrerer sonstiger, einfach ethylenisch ungesättigter Monomere VIII,
wobei sich die Gewichtsprozente der in den jeweiligen Stufen eingesetzten Monomermischungen zu 100 Gew.-% addieren, wobei wenn eine Polymerphase B vorhanden ist, Polymerphase A einen inneren Kern bildet und Polymerphase B eine äußere Schale bildet.

Bevorzugt erfolgt die Polymerisation ohne Zusatz eines organischen Lösungsmittels in der organischen Phasen. Solche Lösungsmittel können z.B. n-Alkane sein wie 1-Octadecan.

Bevorzugt weisen die erfindungsgemäßen Polymerpartikel keine von der sphärischen Anordnung abweichenden Ankergruppen in der Oberfläche des Partikelkerns auf.

Die erfindungsgemäßen Partikel zeigen einen Phasenübergang 1. Ordnung im Temperaturbereich zwischen -20 und 150°C.

Im Rahmen der vorliegenden Erfindung bezeichnet das Präfix "Cx-Cy-" (mit x bzw. y = 1, 2, 3, etc. und y > x), dass die zugehörige Alkylverbindung, - verbindungsklasse oder -gruppe aus x bis y Kohlenstoffatomen bestehen kann. Unverzweigte acyclische Alkylverbindungen, -verbindungsklassen oder -gruppen tragen das Präfix "n-", verzweigte acyclische oder cyclische das Präfix "i-". "(Meth)acryl" steht verkürzt für Acryl- oder Methacrylverbindungen, "(hetero)aromatisch" für aromatische oder heteroaromatische Verbindungen, "(hetero)cyclisch" für cyclische oder heterocyclische Verbindungen.

Zur Herstellung thermotroper Kunststoffe werden die erfindungsgemäßen Partikel mit einem geeigneten transparenten oder transluzenten Kunststoff gemischt. Die Partikel liegen in diesem Kunststoff idealerweise homogen verteilt in Form separater Domänen vor. Der Kunststoff bildet dabei, ggf. in Verbindung mit weiteren Zusatzstoffen, die Matrix und wird deshalb nachfolgend auch als Matrixkunststoff bezeichnet.

Kennzeichnend für das Auftreten von Lichtstreuung sind Brechungsindexunterschiede zwischen Domäne und Matrix. Bei Temperaturen unterhalb des Phasenübergangs (OFF-Modus) stimmen die Brechungsindizes von Domäne n_{D} und Matrix n_{M} bestmöglich überein (n_{D} = n_{M}), so dass der thermotrope Kunststoff idealerweise über die Transparenz bzw. Transluzenz des reinen Matrixkunststoffs verfügt. Im Temperaturbereich des Phasenübergangs nimmt der Domänenbrechungsindex sprunghaft ab (n_{D} < n_{M}), wodurch Licht an der Grenzfläche Domäne/Matrix gestreut wird und die Transparenz bzw. Transluzenz reduziert wird (ON-Modus). Die größte Transmissionsänderung zeigt der thermotrope Kunststoff in der Regel im Temperaturbereich des Phasenübergangs. Dieser Temperaturbereich wird nachfolgend auch als Schalttemperatur bezeichnet.

Die Polymerphase A der erfindungsgemäßen Polymerpartikel ist ein Copolymerisat, dessen Monomereinheiten aus mindestens zwei (I, III) oder aus bis zu fünf verschiedenen Gruppen (I bis V) oder mehr ausgewählt werden. Essentiell für das thermotrope Schaltverhalten sind die Monomere I. Deshalb muss zum Aufbau der Polymerphase A mit mindestens einem Monomer I polymerisiert werden. Polymerphase A wird außerdem mit wenigstens einem Monomer III vernetzt, damit die erfindungsgemäßen Polymerpartikel in den nachfolgenden Verarbeitungsschritten in Form und Größe erhalten bleiben. Ob und zu welchen Gewichtsanteilen Monomere aus den weiteren Klassen II, IV und V mit einpolymerisiert werden, hängt hingegen entscheidend von der Zielschalttemperatur und den Eigenschaften des Matrixkunststoffs (Brechungsindex im Temperaturbereich des OFF-Modus, Verträglichkeit mit den Polymerpartikeln, etc.) ab.

Die Polymerphase A der erfindungsgemäßen Polymerpartikel ist zu 30 bis 99,9 Gew.-%, vorzugsweise zu 50 bis 97 Gew.-%, insbesondere zu 60 bis 95 Gew.-% oder 75 bis 85 Gew.-% aus Monomereinheiten mit n-Alkylseitenketten aus 12 bis 48 Kohlenstoffatomen aufgebaut (Monomere I). In einigen Ausführungsformen ist die Länge der n-Alkylseitenketten im Bereich von 12 bis 16 C-Atomen, in anderen im Bereich von 20 bis 48 C-Atomen. In einigen Ausführungsformen werden zwei oder mehr verschiedene Monomere zusammen eingesetzt.

Die Monomere I bilden nach radikalischer Polymerisation sogenannte Kammpolymere. Sie bestehen aus einer Polymerhauptkette und vielen daran gebundenen C12-C48-n-Alkylseitenketten. Die Seitenketten sind in der Regel über eine Ankergruppe, z.B. eine Estergruppe, kovalent mit der Hauptkette verknüpft.

Anders als bei konventionellen teilkristallinen Polymeren (z.B. Polyethylen), bei denen die Hauptkette kristallisiert, kristallisieren hier die n-Alkyl-Seitenketten (siehe N. A. Plate, V. B. Shibaev, Comb-Like Polymers. Structure and Properties, Polymer Sci.: Macromolecular Reviews 1974, 8, S. 117-253). Das Schmelzen/Kristallisieren erfolgt bei einer bestimmten Phasenübergangstemperatur Tₘ. Die Phasenübergangstemperatur Tₘ kann in bekannter Weise mittels dynamischer Differenzkalorimetrie (DSC) ermittelt werden. Für das Auftreten von Seitenkettenkristallisation ist eine Mindestkettenlänge erforderlich, die je nach Flexibilität der Hauptkette variieren kann. Die Mindestlänge liegt gewöhnlich bei ca. 8 bis 11 Kohlenstoffatomen jenseits der Ankergruppe. Für Seitenketten oberhalb der Mindestlänge steigt die Phasenübergangstemperatur Tₘ mit zunehmender Seitenkettenlänge an. Beispielhaft seien die literaturbekannten Phasenübergangstemperaturen der Homopolymere von n-Tetradecylacrylat mit Tₘ = 19,5°C und von n-Docosylacrylat mit Tₘ = 67,7°C genannt (siehe K. A. O'Leary, D. R. Paul, Physical properties of poly(n-alkyl acrylate) copolymers, Part 1. Crystalline/crystalline combinations, Polymer 2006, 47, S. 1226-1244).

Durch Copolymerisation von zwei oder mehreren Monomeren I mit unterschiedlich langer Seitenkette kann über das Gewichtsverhältnis jede Phasenübergangstemperatur innerhalb des von den Homopolymeren festgelegten Temperaturfensters eingestellt werden. Für Copolymere aus beispielsweise zwei Monomeren I mit unterschiedlich langer Seitenkette gilt dann ganz allgemein: Je höher der Anteil des kürzerkettigen Monomeren (bzw. je kürzer dessen Kette) desto geringer ist die Anzahl der kristallisierbaren Kohlenstoffatome im Copolymer und desto niedriger der Tₘ.

Die Monomere I werden bevorzugt ausgewählt aus der Gruppe:
Ia) der Ester von α,β-ethylenisch ungesättigten C3-C4-Carbonsäuren und C12-C48-n-Alkanolen,
Ib) der Mono- und Dialkylester von α,β-ethylenisch ungesättigten C4-C6-Dicarbonsäuren mit mindestens einer C12-C48-n-Alkylseitenkette als Esterrest und
Ic) der Allyl- und Vinylester von C13-C49-n-Alkancarbonsäuren.

Dem Fachmann sind weitere Gruppen radikalisch polymerisierbarer, einfach ethylenisch ungesättigter Monomere I mit wenigstens einer C12-C48-n-Alkylseitenkette bekannt.

Bevorzugte Monomere I aus der Gruppe Ia) sind die (Meth)acrylate von n-Dodecanol, n-Tetradecanol, n-Hexadecanol, n-Octadecanol, n-Docosanol und n-Octacosanol. Neben den Reinverbindungen kommen auch kommerzielle Gemische aus C12-C48-n-Alkyl(meth)acrylaten mit unterschiedlich langen n-Alkylresten (z.B. SA 1618 von BASF) in Betracht. In einigen Ausführungsformen wird kein Octadecylacrylat eingesetzt.

Zu den Monomeren I der Gruppe Ib) gehören die Dialkylester von α,β-ethylenisch ungesättigten C4-C6-Dicarbonsäuren mit zwei identischen C12-C48-n-Alkylgruppen, zwei unterschiedlichen C12-C48-n-Alkylgruppen, einer C12-C48-n-Alkylgruppe und einer C1-C11-n-Alkyl- oder C3-C48-i-Alkylgruppe sowie die entsprechenden Monoalkylester mit einer C12-C48-n-Alkylgruppe. Bevorzugt werden die Dialkylester der Malein- und Itaconsäure mit n-Dodecanol, n-Tetradecanol, n-Hexadecanol, n-Octadecanol, n-Docosanol und n-Octacosanol eingesetzt.

Bevorzugte Monomere I aus der Gruppe Ic) sind die Vinyl- und Allylester von n-Tetradecan-, n-Hexadecan-, n-Octadecan-, n-Docosan- und n-Octacosansäure.

Zur Absenkung der Phasenübergangstemperatur Tₘ eines im Wesentlichen aus den Monomeren I gebildeten Polymers kommen insbesondere auch radikalisch polymerisierbare Monomere in Betracht, die über eine lineare Alkylseitenkette mit weniger als 12 Kohlenstoffatomen oder über eine verzweigte cyclische oder acyclische Alkylseitenkette mit 3 bis 48 Kohlenstoffatomen verfügen (Monomere II). Die Monomere II werden zu 0 bis 60 Gew.-%, bevorzugt zu 0 bis 40 Gew.-%, insbesondere zu 0 bis 20 Gew.-% oder 1 bis 60 Gew.-% mit einpolymerisiert.

Die Monomere II werden bevorzugt ausgewählt aus der Gruppe IIa) der Ester von α,β-ethylenisch ungesättigten C3-C4-Carbonsäuren und C1-C11-n-Alkanolen oder C3-C48-i-Alkanolen, IIb) der Mono- und Diester von α,β-ethylenisch ungesättigten C4-C6-Dicarbonsäuren und C1-C11-n-Alkanolen und/oder C3-C48-i-Alkanolen und IIc) der Allyl- und Vinylester von C2-C12-n-Alkancarbonsäuren und C4-C49-i-Alkancarbonsäuren.

Bevorzugte Monomere II aus der Gruppe IIa) sind die (Meth)acrylate von Methanol, Ethanol, n-Propanol, Isopropanol, n-Butanol, sec-Butanol, Isobutanol, tert-Butanol, n-Hexanol, n-Octanol, 2-Ethylhexanol, n-Decanol, Isodecanol und Isooctadecanol, Cyclohexanol, 4-tert-Butylcyclohexanol, Borneol, Isoborneol und 3,3,5-Trimethylcyclohexanol sowie Dihydrodicyclopentadienyl-(meth)acrylat.

Bevorzugte Monomere II aus der Gruppe IIb) sind die Diester der Malein- und Itaconsäure mit Methanol, Ethanol, n-Butanol, Isobutanol und 2-Ethylhexanol.

Bevorzugte Monomere II aus der Gruppe IIc) sind Vinyl- und Allylacetat sowie die entsprechenden Propionate, Butyrate, Valerate, Capronate, Decanoate und Laurate. In einigen Ausführungsformen wird kein Vinylacetat eingesetzt.

Die Streueigenschaften des thermotropen Kunststoffs hängen maßgeblich von der Größe der Streudomänen ab (siehe Ausführungen weiter oben). Die Streudomänengröße wird in erster Linie durch den Durchmesser der Polymerphase A der erfindungsgemäßen Polymerpartikel definiert. Damit Form und Größe der Polymerphase A nach der Verarbeitung mit dem Matrixkunststoff erhalten bleibt, wird die Polymerphase A vorzugsweise vernetzt. Zur inneren Vernetzung werden radikalisch polymerisierbare di- oder polyfunktionelle Vernetzer (Monomere III) verwendet. Darunter versteht man Monomere mit wenigstens zwei nicht konjugierten ethylenischen Doppelbindungen. Die Monomere III werden zu 0,1 bis 20 Gew.-%, bevorzugt zu 0,1 bis 10 Gew.-% mit einpolymerisiert.

Als di- und polyfunktionelle Monomere III kommen IIIa) die (Meth)acrylsäureester von mehrwertigen Alkoholen, IIIb) die Vinyl- und Allylether von mehrwertigen Alkoholen sowie IIIc) zwei- oder mehrfach allyl-, vinyl- oder (meth)acrylsubstituierte (hetero)cyclische und (hetero)aromatische Verbindungen in Betracht.

Geeignete di- oder polyfunktionelle Monomere III der Gruppe IIIa) sind beispielsweise Ethylenglycol-di(meth)acrylat, 1,3-Butandiol-di(meth)acrylat, 1,4-Butandiol-di(meth)acrylat, 1,6-Hexandiol-di(meth)acrylat, 1,10-Decandiol-di(meth)acrylat, Di(ethylenglycol)-di(meth)acrylat, Tri(ethylenglycol)-di(meth)-acrylat, Tetra(ethylenglycol)-di(meth)acrylat, Di(propylenglycol)-di(meth)acrylat, Tri(propylenglycol)-di(meth)acrylat, Tricyclodecandimethanol-di(meth)acrylat, 2-Hydroxy-1,3-di(meth)acryloxypropan, Glycerol-di(meth)acrylat, Glycerol-1,3-diglycerolat-di(meth)acrylat, Neopentylglycol-di(meth)acrylat, Diurethan-di(meth)acrylat, Trimethylolpropan-ethoxylat-methylether-di(meth)acrylat, Trimethylolpropan-tri(meth)acrylat, Trimethylolpropan-ethoxylat-tri(meth)acrylat (EO-Grad = 3-20), Trimethylolpropan-propoxylat-tri(meth)acrylat, Pentaerythritol-tri(meth)acrylat, Glycerolpropoxylat-tri(meth)acrylat, Di(trimethylol)-propan-tetra(meth)acrylat, Pentaerythritol-tetra(meth)acrylat, Di(pentaerythritol)-penta(meth)acrylat und Di(pentaerythritol)-hexa(meth)acrylat.

Geeignete di- oder polyfunktionelle Monomere III der Gruppe IIIb) sind beispielsweise 1,4-Butandiol-divinylether, 1,6-Hexandiol-divinylether, Di(ethylenglycol)-divinylether, Bis[4-(vinyloxy)butyl]-adipat, Bis[4-(vinyloxy)butyl]-succinat, Bis[4-(vinyloxy)butyl]-isophthalat, Bis[4-(vinyloxy)butyl]-terephthalat, Bis[4-(vinyloxy)butyl]-1,6-hexandiylbiscarbamat, 1,4-Cyclohexandimethanoldivinylether, Tris[4-(vinyloxy)butyl]-trimellitat, Allylether und Trimethylolpropandiallylether.

Geeignete di- oder polyfunktionelle Monomere III der Gruppe IIIc) sind beispielsweise Divinylbenzen, 2,4,6-Triallyloxy-1,3,5-triazin, 1,3,5-Triallyl-1,3,5-triazin-2,4,6(1H,3H,5H)-trion, Tris[2-(acryloyloxy)ethyl]isocyanurat, 1,3,5-Triacryloylhexahydro-1,3,5-triazin, 2,2'-Diallylbisphenol-A, 2,2'-Diallylbisphenol-A-diacetatether, 1,4-Phenylendi(meth)acrylat, Bisphenol-A-ethoxylat-di(meth)-acrylat (EO-Grad = 2-30), Bisphenol-A-glycerolat-di(meth)acrylat, Bisphenol-A-propoxylat-glycerolat-di(meth)acrylat, Bisphenol-A-di(meth)acrylat und Bisphenol-F-ethoxylat-di(meth)acrylat.

Im Temperaturbereich des OFF-Modus wird für die thermotropen Kunststoffe eine Transparenz bzw. Transluzenz angestrebt, die idealerweise der des reinen Matrixkunststoffs entspricht. Hierzu ist es in den meisten Fällen erforderlich, den Brechungsindex der erfindungsgemäßen Polymerpartikel an den des jeweiligen Matrixkunststoff anzugleichen. Die Brechungsindizes n_{D}²⁰ (λ = 589 nm, 20°C) geeigneter transparenter bzw. transluzenter Matrixkunststoffe liegen im Bereich von 1.35 bis 1.65, mehrheitlich im Bereich von 1.49 und 1.59 (siehe Saechtling Kunststoff Taschenbuch, 30. Ausgabe, Carl Hanser Verlag München, 2007, Tafel 8.28, S. 764-765). Homo- und Copolymere, die aus den Monomeren I und ggf. Monomeren II aufgebaut werden, haben bei Temperaturen unterhalb des Phasenübergangs (OFF-Modus) häufig einen niedrigeren Brechungsindex.

Um den Brechungsindex der erfindungsgemäßen Polymerpartikel im Temperaturbereich des OFF-Modus dem des Matrixkunststoffs anzupassen, wird mit den (hetero)aromatischen Monomeren IV copolymerisiert, wobei die Homopolymere der Monomere IV über einen Brechungsindex n_{D}²⁰ > 1.50, vorzugsweise n_{D}²⁰ > 1.55 verfügen. Sie werden zu 0 bis 69,9 Gew.-%, bevorzugt zu 0 bis 50 Gew.-%, insbesondere zu 0 bis 30 Gew.-% mit einpolymerisiert. In einigen Ausführungsformen beträgt der Gehalt an Monomeren IV mindestens 0,1 Gew.-%.

Die Monomere IV werden bevorzugt ausgewählt aus der Gruppe IVa) der Vinyl(hetero)aromaten und IVb) der (hetero)aromatischen (Meth)acrylate.

Geeignete Monomere IV der Gruppe IVa) sind beispielsweise Styren, 4-Acetoxystyren, 2-Bromstyren, 3-Bromstyren, 4-Bromstyren, 4-tert-Butoxystyren, 4-tert-Butylstyren, 2-Chlorstyren, 3-Chlorstyren, 4-Chlorstyren, 2,6-Dichlorstyren, 3,4-Dimethoxystyren, 2,4-Dimethylstyren, 2,5-Dimethylstyren, 4-Ethoxystyren, 3-Methylstyren, 4-Methylstyren, 4-Vinylanisol, 3-Vinylbenzylchlorid, 4-Vinylbenzylchlorid, 9-Vinylanthracen, 4-Vinylbiphenyl, 2-Vinylnaphthalen, 9-Vinylcarbazol, N-Vinylphthalimid, 2-Vinylpyridin, 4-Vinylpyridin und 1-Vinyl-2-pyrrolidinon.

Geeignete Monomere IV der Gruppe IVb) sind beispielsweise Benzyl(meth)acrylat, 2-Hydroxy-3-phenoxypropyl-(meth)acrylat, Phenoxyethyl-(meth)acrylat, Phenyl(meth)acrylat, Pentabrombenzyl-(meth)acrylat, Pentabromphenyl-(meth)acrylat, 2,4,6-Tribromphenyl-(meth)acrylat, 9H-Carbazol-9-ethyl-(meth)acrylat, 2-Hydroxypropyl-2-([meth]acryloyloxy)ethyl-phthalat, 1-Naphthyl-(meth)acrylat und 1-Pyrenmethyl-(meth)acrylat.

Alternativ oder ergänzend zu den Monomeren IV können auch vernetzende Monomere III mit aromatischer Grundstruktur, wie z.B. Divinylbenzen, für die Erhöhung des Brechungsindex verwendet werden.

Zur Verbesserung der Herstellungs- und Verarbeitungseigenschaften der erfindungsgemäßen Polymerpartikel kommen als Monomere V sonstige, einfach ethylenisch ungesättigte Monomere in Betracht, die von den einfach ethylenisch ungesättigten Monomeren I, II und IV verschieden sind. Sie werden zu 0 bis 40 Gew.-%, bevorzugt zu 0 bis 20 Gew.-%, insbesondere zu 0 bis 10 Gew.-% oder 1 bis 40 Gew.-% mit einpolymerisiert. In einigen Ausführungsformen beträgt der Anteil der Monomere V mindestens 0,1 Gew.-%.

Die Monomere V werden vorzugsweise aus der Gruppe Va) der α,β-ethylenisch ungesättigten Mono- und Dicarbonsäuren, Vb) der α,β-ethylenisch ungesättigten Carbonsäureanhydride, Vc) der α,β-ethylenisch ungesättigten Carbonsäureamide und Vd) der Hydroxy-, Alkoxy-, Carboxy-, Amino-, Epoxy-, Sulfo-, Silyl- und Halogen-substituierten Alkyl(meth)acrylate sowie heterocyclischen (Meth)-acrylate ausgewählt.

Geeignete Monomere V der Gruppe Va) sind beispielsweise (Meth)acrylsäure, Maleinsäure und Itaconsäure.

Geeignete Monomere V der Gruppe Vb) sind beispielsweise Maleinsäureanhydrid, Itaconsäureanhydrid und Crotonsäureanhydrid.

Geeignete Monomere V der Gruppe Vc) sind beispielsweise N-Ethyl-, N-Isopropyl-, N-tert-Butyl-, N,N-Dimethyl-, N,N-Diethyl-, N-Hydroxymethyl-, N-Hydroxyethyl-, N-(3-Methoxypropyl)-, N-(Butoxymethyl)-, N-(Isobutoxy-methyl)-, N-Phenyl-, N-Diphenylmethyl-, N-(Triphenylmethyl)- und N-[3-(Dimethylamino)propyl]-(meth)acrylamid.

Geeignete Monomere V der Gruppe Vd) sind beispielsweise 2-Hydroxyethyl-, 2-Hydroxypropyl-, 3-Hydroxypropyl-, 2-Hydroxybutyl-, 3-Hydroxybutyl-, 5-Hydroxybutyl-, Hydroxyethyl-caprolacton-, 3-Chlor-2-Hydroxy-propyl-, 2-Methoxyethyl-, 2-Ethoxyethyl-, 2-Butoxyethyl-, Di(ethylenglycol)-methylether-, Di(ethylenglycol)-ethylether-, Di(ethylenglycol)-2-ethylhexylether-, Tri(ethylenglycol)-methylether-, Ethylenglycol-dicyclopentenylether-, Ethyldiglycol-, Ethyltriglycol-, Butyldiglycol-, 2-Carboxyethyl-, 2-(Dimethylamino)ethyl-, 2-(Diethylamino)ethyl-, 2-(Diisopropylamino)ethyl-, 2-(tert-Butylamino)ethyl-, 3-(Dimethylamino)propyl-, 2-[[(Butylamino)carbonyl]oxy]ethyl-, Glycidyl-, 2-(Methylthio)ethyl-, 3-(Trimethoxysilyl)propyl-, 2-(Trimethylsilyloxy)ethyl-, 3-[Tris(trimethylsiloxy)silyl]propyl-, Trimethylsilyl-, 2-Chlorethyl-, 2,2,2-Trifluorethyl-, Tetrahydrofurfuryl- und 2-N-Morpholinoethyl-(meth)acrylat sowie 4-(Meth)acryloyl-morpholin, mono-2-([Meth]acryloyloxy)-ethylsuccinat und mono-2-([Meth]acryloyloxy)-ethylmaleat.

In einer bevorzugten Ausführungsform enthält die Monomerphase zum Aufbau der Polymerphase A:
- 75 bis 85 Gew.-% Monomer I
- 5 bis 10 Gew.-% Monomer II
- 3 bis 6 Gew.-% Monomer III, 4 bis 6 Gew.-% Monomer VI
- 3 bis 5 Gew.-% Monomer V.

In anderen Ausführungsformen betragen die Gewichtsverhältnisse der Monomerphase zur Herstellung der Polymerphase A
- 65 bis 75 Gew.-% Monomer I
- 15 bis 25 Gew.-% Monomer II
- 3 bis 6 Gew.-% Monomer III
- 4 bis 6 Gew.-% Monomer V.

In anderen Ausführungsformen betragen bevorzugte Gehalte der Monomerphase zur Herstellung der Polymerphaes A
- 85 bis 92 Gew.-% Monomer I
- 3 bis 6 Gew.-% Monomer III
- 1 bis 5 Gew.-% Monomer IV
- 3 bis 6 Gew.-% Monomer V.

In weiteren Ausführungsformen liegt der Gehalt der Monomerphase zum Aufbau der Polymerphase A bei
85 bis 92 Gew.-% Monomer I
3 bis 7 Gew.-% Monomer III
4 bis 8 Gew.-% Monomer V.

In weiteren Ausführungsformen liegen bevorzugte Zusammensetzungen der Monomerphase zur Herstellung der Polymerphase A bei
85 bis 94 Gew.-% Monomer I
3 bis 8 Gew.-% Monomer III
3 bis 8 Gew.-% Monomer V.

Die genannten Inhaltsstoffe der Monomerphase zur Herstellung der Polymerphase A betragen zusammen 100 Gew.-%. In den genannten Ausführungsformen können grundsätzlich weitere Inhaltsstoffe in der Monomerphase enthalten sein. Neben einem Polymerisationsinitiator können dies grundsätzlich auch Beimengungen anderer Substanzen sein. Bevorzugt liegen die weiteren Inhaltsstoffe bei weniger als 5 Gew.-%, mehr bevorzugt weniger als 3 Gew.-%, noch mehr bevorzugt weniger als 1 Gew.-% oder weniger als 0,5 Gew.-%.

In einigen Ausführungsformen ist die Anwesenheit der Polymerphase B notwendig.

Die Herstellung der Polymerphase A der erfindungsgemäßen Polymerpartikel erfolgt durch radikalische Copolymerisation einer Öl-in-Wasser-Miniemulsion.

Polymerpartikel im Größenbereich von 50 nm bis ca. 1 µm werden typischerweise über ein- oder mehrstufige Öl-in-Wasser-Emulsionspolymerisationen erzeugt (siehe z.B. C. S. Chern, Emulsion polymerization mechanisms and kinetics, Prog. Polym. Sci. 2006, 31, S. 443-486). Zur besseren Unterscheidung von der Öl-in-Wasser-Miniemulsionspolymerisation (o/w-Miniemulsionspolymerisation) wird die o/w-Emulsionspolymerisation nachfolgend als o/w-Makroemulsionspolymerisation bezeichnet. Ausgangspunkt für die eigentliche Polymerisationsreaktion ist dabei eine o/w-Makroemulsion, in der die zu polymerisierenden Monomere die Ölphase bilden. Die o/w-Makroemulsion wird üblicherweise durch einfaches mechanisches Rühren in Gegenwart eines Tensids erzeugt. Die Durchmesser der Monomertröpfchen sind vergleichsweise groß (>> 1 µm) und die Größenverteilung breit. Die Monomertröpfchen sind nicht der Hauptort der Polymerisation. Sie dienen vielmehr als Monomeren-Reservoir, aus dem die wässrige Phase mit den mindestens anteilig wasserlöslichen Monomermolekülen versorgt wird. Das Tensid wird in der Regel oberhalb der kritischen Mizellbildungskonzentration (cmc) eingesetzt. Wird diese Tensidkonzentration überschritten, assoziieren mehrere Tensidmoleküle zu kugelförmigen Mizellen (≤ 10 nm), in dessen Kern die Monomermoleküle eingelagert werden können. Die in der wässrigen Phase durch wasserlösliche Polymerisationsinitiatoren generierten Initiatorradikale können nun die Polymerisation sowohl in den Monomertröpfchen als auch in den mit Monomermolekülen gefüllten Mizellen starten. Durch die hohe Anzahl von Mizellen im Vergleich zu den Monomertröpfchen ist die Gesamtoberfläche der Mizellen um ein Vielfaches größer, so dass ein Polymerisationsstart in den Mizellen sehr viel wahrscheinlicher ist (mizellare Nukleation).

Industriell hergestellte o/w-Makroemulsionspolymerisate sind zum Beispiel Schlagzähmodifizierer für Poly(meth)acrylat-Formmassen. Diese 2- oder 3-phasigen Polymerpartikel mit Kern-Schale- oder Kern-Schale-Schale-Morphologie haben einen Gesamtdurchmesser im Bereich von typischerweise 100 bis 300 nm (siehe z.B. EP 1 572 769). Zur radikalischen Polymerisation extrem hydrophober Monomere, wie die erfindungsgemäßen Monomere I, ist dieses Verfahren jedoch wenig geeignet. Für eine Monomerwanderung von den großen Monomertröpfchen durch die wässrige Phase an den Ort der Polymerisation reicht die Wasserlöslichkeit der Monomere I gewöhnlich nicht aus. Einige wenige Beispiele zeigen, dass die Diffusion hydrophober Monomere durch geeignete Phasentransfermittel, wie z.B. Cyclodextrin, begünstigt werden kann (siehe z.B. R. J. Leyrer, W. Mächtle, Macromol. Chem. Phys. 2000, 201, S. 1235-1243). Doch eignet sich diese Methode in der Regel nicht für Copolymerisationen, bei denen der Gewichtsanteil der hydrophoben Monomere an der Monomerengesamtmasse 50 Gew.-% oder mehr beträgt. Zudem sind vergleichsweise große Mengen Phasentransfermittel notwendig, was zusätzliche Kosten für erhöhten Materialeinsatz, Abtrennung dieser Additive und ggf. Rückgewinnung verursacht.

Aus hydrophoben Monomeren aufgebaute Polymerpartikel können prinzipiell durch Suspensionspolymerisation synthetisiert werden. Da hier die radikalische Polymerisation durch öllösliche Initiatoren gestartet wird, erfolgt die Partikelbildung fast ausschließlich in den Monomertröpfchen und nicht in der wässrigen Phase. Im Hinblick auf die erfindungsgemäße Verwendung sind die Partikeldurchmesser von Suspensionspolymerisaten allerdings in der Regel wesentlich zu groß. Je nach Reaktionsführung werden typischerweise Polymerpartikel mit Durchmessern zwischen 10 µm bis 5 mm erhalten (siehe z.B. Eduardo Vivaldo-Lima et al., An Updated Review on Suspension Polymerization, Ind. Eng. Chem. Res. 1997, 36, S. 939-965).

Zum Aufbau der Polymerphase A der erfindungsgemäßen Polymerpartikel wird daher die Miniemulsionstechnik angewendet (siehe z.B. F. J. Schorck, Y. Luo, W. Smulders, J. P. Russum, A. Butte, K. Fontenot, Adv. Polym. Sci. 2005, 175, S. 129-255). Die o/w-Miniemulsionspolymerisation unterscheidet sich hinsichtlich ihrer Durchführung von der klassischen o/w-Makroemulsionspolymerisation im Wesentlichen durch zwei Besonderheiten:
a) einen Homogenisierungsschritt und
b) gegebenenfalls durch die Zugabe eines Costabilisators ("Ultrahydrophob").

Im Homogenisierungsschritt wird durch Einwirken hoher Scherkräfte, z.B. in Form von Ultraschall, eine o/w-Miniemulsion erzeugt. Diese besteht aus kinetisch stabilen, meist nano- bis submikroskaligen und in ihrer Größe eng verteilten Tröpfchen innerhalb der Wasserphase. Die gegenüber o/w-Makroemulsionen hohe Stabilität von o/w-Miniemulsionen resultiert aus dem Zusammenwirken eines Tensids und eines Costabilisators. Während das Tensid die Tröpfchen gegen Kollision und Koaleszenz stabilisiert, verhindert der Costabilisator die so genannte Ostwald-Reifung. Darunter versteht man eine Monomerwanderung von den kleinen zu den größeren Tröpfchen als Folge des hohen Laplace-Druck in den kleinen Tröpfchen. Der Costabilisator liegt gelöst und homogen verteilt in der Tröpfchenphase vor und hat eine sehr niedrige Wasserlöslichkeit, weshalb er häufig auch als "Ultrahydrophob" bezeichnet wird. Da der Costabilisator aufgrund seiner geringen Wasserlöslichkeit an einer Monomerwanderung durch die wässrige Phase nicht teilnimmt, würde durch Ostwald-Reifung ein Konzentrationsgradient zwischen den Monomertröpfchen resultieren. Die Bildung eines Konzentrationsgradienten ist aus thermodynamischer Sicht ungünstig. Deshalb findet in Gegenwart des Costabilisators praktisch keine Ostwald-Reifung statt. Typische Costabilisatoren sind beispielsweise langkettige Alkane, wie n-Hexadecan. Für die Synthese der erfindungsgemäßen Polymerphase A ist gewöhnlich kein Costabilisator erforderlich, da die Monomere I in der Regel über eine ausreichend niedrige Wasserlöslichkeit verfügen und somit die Funktion des Costabilisators übernehmen. Die Durchführung des Verfahrens ohne Zusatz eines Costabilisators, insbesondere von 1- Octadecan ist bevorzugt. Im Unterschied zur o/w-Makroemulsionspolymerisation findet die Partikelnukleierung in den Monomertröpfchen statt. Dies ermöglicht eine sehr gute Kontrolle der Partikelgröße, da aus nahezu jedem Tröpfchen ein Polymerpartikel gebildet wird. Die Tröpfchengröße und damit auch die Partikelgröße sind über die Art und Menge des Tensids einstellbar. Bei Verwendung ionischer Tenside liegt der Partikeldurchmesser typischerweise bei 50 bis 500 nm. Mit nichtionischen Tensiden oder durch Verwendung von Schutzkolloiden und/oder Pickering-Systemen lassen sich auch größere Durchmesser bis ca. 10 µm einstellen.

Zur Herstellung der erfindungsgemäßen Polymerpartikel wird zunächst in einfacher, an sich bekannter Weise eine o/w-Makroemulsion erzeugt, indem man die jeweiligen zum Aufbau der Polymerphase A notwendigen Monomere zu einer einheitlichen Monomerphase mischt und in eine wässrige Tensidlösung, z.B. unter mechanischem Rühren, einbringt. Je nach Aggregatzustand des verwendeten Monomeren I bzw. des verwendeten Gemisches aus zwei oder mehreren Monomeren I kann es vorteilhaft sein, dass die Monomerphase vorher erwärmt wird, damit eine einheitliche flüssige Monomerphase resultiert. Die Temperatur wird dann vorzugsweise nur so hoch gewählt, dass die Monomerphase gerade einheitlich flüssig ist. In der Regel liegt diese Temperatur im Bereich oder knapp oberhalb der Schmelztemperatur des verwendeten Monomeren I bzw. des Gemisches aus mehreren Monomeren I. Vorteilhafterweise wird die wässrige Tensidlösung ebenfalls auf diese Temperatur vortemperiert, um ein Ausflocken des oder der Monomere I bei der Vereinigung beider Phasen zu verhindern. Die wässrige Tensidlösung kann zusätzlich Puffersubstanzen wie beispielsweise Natriumhydrogencarbonat enthalten, die den pH-Wert der wässrigen Phase im Hinblick auf die spätere radikalische Polymerisation vorteilhaft gestalten.

Als Tenside kommen prinzipiell alle anionischen, kationischen und nichtionischen Tenside in Betracht, die auch für o/w-Makroemulsionspolymerisationen geeignet sind. Vorzugsweise werden anionische und/oder nichtionische Tenside verwendet.

Gängige anionische Tenside sind beispielsweise Alkylsulfate, Alkylsulfonate, Alkylarylsulfonate, Alkyldiphenyloxiddisulfonate, Alkylisethionate, Alkylsulfosuccinate, Alkylcarboxylate und Alkylphosphate mit typischerweise 8 bis 18 Kohlenstoffatomen im Alkylrest. Das Gegenion ist gewöhnlich ein Alkali-Kation (in der Regel Na+) oder Ammonium (NH4+).

Gängige nichtionische Tenside sind beispielsweise Ethoxylate von Fettalkoholen, Alkylphenolen und Fettsäuren mit typischerweise jeweils 4 bis 36 Kohlenstoffatomen im Alkylrest und einem EO-Grad von 3 bis 40.

Dem Fachmann sind weitere gebräuchliche anionische und nichtionische Tenside bekannt. Sie werden beispielsweise in Ullmann's Encyclopedia of Industrial Chemistry, Surfactants, Wiley-VCH Verlag GmbH & Co. KGaA, Weinheim, 2012, DOI: 10.1002/14356007.a25_747, beschrieben.

Die Tensidmenge wird vorzugsweise so gewählt, dass die kritische Mizellbildungskonzentration (cmc) in der wässrigen Phase der letztlich resultierenden o/w-Miniemulsion im Wesentlichen nicht überschritten wird. In der Regel liegt die Tensidmenge im Bereich von 0,1 bis 5 Gew.-% bezogen auf die in der o/w-Miniemulsion enthaltene Menge an Monomeren.

Um ein Agglomerieren, Aggregieren, Koagulieren oder Ausflocken der Primärpartikel während der Polymerisation zu unterbinden, kann es vorteilhaft sein, dass der wässrigen Phase zusätzlich Schutzkolloide beigefügt werden. Mögliche Schutzkolloide sind hochmolekulare, wasserlösliche Verbindungen, wie beispielsweise Polyvinylalkohol, Polyvinylpyrrolidon und dessen Copolymerisate sowie Cellulose-Derivate, wie beispielsweise Methylcellulose und Hydroxypropylcellulose. Die Verwendung von Polyvinylalkohol ist weniger bevorzugt.

Um zur erfindungsgemäß benötigten o/w-Miniemulsion zu gelangen, wird die o/w-Makroemulsion durch Einbringen hoher Scherkräfte homogenisiert. Ein derart hoher Energieeintrag kann durch Emulgiermaschinen, wie beispielsweise Ultraschallreaktoren, Hochdruckhomogenisatoren, Rotor-Stator-Systeme, statischen Mischern oder Kombinationen davon erzeugt werden. Mit zunehmendem Energieeintrag nimmt die Tröpfchengröße in der Emulsion zunächst ab. Die Energiemenge kann dabei entweder über die Intensität oder die Dauer des Energieeintrags eingestellt werden. Für jede Emulsion einer spezifischen Zusammensetzung existiert ein Grenzwert des optimalen Energieeintrags, der zu einer minimalen Tröpfchengröße führt. Ist diese minimale Tröpfchengröße erreicht, führt zusätzlich eingebrachte Energie lediglich zur weiteren Verringerung der Tröpfchengrößenverteilung.

Bei der erfindungsgemäß verwendeten Miniemulsion handelt es sich um eine im wesentlichen wässrige, durch grenzflächenaktive Substanzen stabilisierte Emulsion von Monomeren mit einer Teilchengröße der emulgierten Tröpfchen von 10 nm bis 600 nm, insbesondere von 40 nm bis 450 nm, vorzugsweise von 50 nm bis 400 nm.

Der Anteil der Monomerphase A an der Gesamtmasse der o/w-Miniemulsion beträgt zwischen 5 und 70 Gew.-%, vorzugsweise zwischen 20 und 50 Gew.-%, oder zwischen 20 und 40 Gew.-%. Es wird bevorzugt, dass der Anteil der organischen Phase mehr als 15 oder mehr als 20, oder mehr als 25 Gew.-% beträgt.

Zum Aufbau der Polymerphase A kommen als radikalische Polymerisationsinitiatoren prinzipiell alle Verbindungen in Betracht, die in der Lage sind, eine radikalische Polymerisation zu starten. Im Unterschied zur o/w-Makroemulsionspolymerisation können neben wasserlöslichen auch öllösliche Initiatoren verwendet werden.

Geeignete öllösliche radikalische Polymerisationsinitiatoren sind die gängigen Peroxo- und Azoverbindungen, wie beispielsweise Dilauroylperoxid, Dibenzoylperoxid, tert-Amylperoxypivalat, tert-Amylperoxy-2-ethylhexanoat, 2,2'-Azodi(isobutyronitril) und 1,1'-Azobis(cyclohexancarbonitril).

Geeignete wasserlösliche radikalische Polymerisationsinitiatoren sind beispielsweise die Ammonium- und Alkaliperoxodisulfate, Cumolhydroperoxid, tert-Butylhydroperoxid und Wasserstoffperoxid.

Als Polymerisationsinitiatoren können auch so genannte Redoxinitiatorsysteme verwendet werden. Als Oxidationsmittel für die redoxinitiierte Polymerisation eignen sich zum Beispiel die bereits genannten wasserlöslichen Polymerisationsinitiatoren. Geeignete Reduktionsmittel sind beispielsweise Natriumdithionit, Natriumdisulfit, Natriumhydrogensulfit und Ascorbinsäure. Des Weiteren kann die Wirksamkeit der Redoxinitiatorsysteme noch durch Zusatz von Metallsalzen, wie zum Beispiel Eisensalze, ggf. auch in Verbindung mit Komplexbildnern, verbessert werden. Weitere gebräuchliche Redoxinitiatorsysteme werden beispielsweise in A.S. Sarac, Redox polymerization, Prog. Polym. Sci. 1999, 24, S. 1149-1204, beschrieben.

In Abhängigkeit vom Aggregatzustand und Löslichkeitsverhalten des radikalischen Polymerisationsinitiators kann er in Substanz, als Lösung, als Suspension oder als Emulsion zugeführt werden.

Wasserlösliche Polymerisationsinitiatoren werden vorzugsweise als wässrige Lösung erst nach dem Homogenisierungsschritt zur o/w-Miniemulsion gegeben. Damit kann das Risiko einer vorzeitigen Polymerisation, insbesondere während des energieintensiven Homogenisierungsschrittes, minimiert werden.

Öllösliche Polymerisationsinitiatoren mit ausreichend hoher Zerfallstemperatur und guter Löslichkeit in der Monomerphase können in der Regel noch vor der Herstellung der o/w-Makroemulsion zur Monomerphase gegeben und in dieser vollständig gelöst werden. Öllösliche Polymerisationsinitiatoren mit niedriger Zerfallstemperatur werden vorzugsweise erst zu einem späteren Zeitpunkt zugegeben, dann vorzugsweise nach dem Homogenisierungsschritt als Lösung, Suspension oder Emulsion.

Die Zugabe der Polymerisationsinitiatoren kann vollständig, portionsweise oder kontinuierlich erfolgen. Alternativ kann auch ein Teil des Polymerisationsinitiators auf einmal und der verbleibende Teil über einen längeren Zeitraum kontinuierlich oder portionsweise zudosiert werden.

In einigen Fällen kann es vorteilhaft sein, dass zwei oder mehrere verschiedene öl- und/oder wasserlösliche Polymerisationsinitiatoren verwendet werden. Diese verfügen dann vorzugsweise über verschiedene Zerfallstemperaturen und werden zu unterschiedlichen Zeitpunkten vor bzw. während der Polymerisationsreaktion zugesetzt.

Üblicherweise werden 0,1 bis 5 Gew.-% radikalischer Polymerisationsinitiator bezogen auf die zu polymerisierende Monomermenge eingesetzt.

Die Polymerisationstemperatur richtet sich hauptsächlich nach der Zerfallstemperatur der verwendeten radikalischen Polymerisationsinitiatoren. Typische Polymerisationstemperaturen liegen zwischen 20 und 100°C, insbesondere zwischen 50 und 95°C. Unter erhöhten Druckbedingungen kann die Polymerisationstemperatur auch mehr als 100°C betragen. Gewöhnlich wird die Polymerisation bei Normaldruck durchgeführt.

Die Reaktionszeiten zur Bildung der Polymerphase A betragen üblicherweise zwischen 1 bis 10 Stunden, meistens zwischen 1,5 bis 4 Stunden.

Auf die durch o/w-Miniemulsionspolymerisation hergestellte Polymerphase A kann in einem weiteren Syntheseschritt eine zweite Polymerphase B aufgepfropft werden, die in ihrer chemischen Zusammensetzung von Polymerphase A verschieden ist. Die Synthesebedingungen werden so gewählt, dass Polymerpartikel mit Kern-Schale-Morphologie resultieren. Polymerphase A bildet dann den inneren Kern und Polymerphase B die äußere Schale.

Ob eine äußere Polymerphase B erforderlich ist, hängt maßgelblich von der Verträglichkeit zwischen Polymerphase A und Matrixkunststoff ab. Bei mangelhafter Verträglichkeit werden die erfindungsgemäßen Polymerpartikel im Matrixkunststoff nur unzureichend verteilt. Die Partikel bilden dann häufig größere Agglomerate oder Aggregate, wodurch die Materialeigenschaften und optischen Eigenschaften des Matrixkunststoffs beeinträchtigt werden.

Bei guter Verträglichkeit zwischen Polymerphase A und Matrixkunststoff wird vorzugsweise keine weitere Polymerphase B auf Polymerphase A aufgepfropft. Das hat im Wesentlichen zwei Gründe: 1) Durch Polymerphase B sinkt der Gewichtsanteil der Polymerphase A an der Partikelgesamtmasse. Um einen thermotropen Kunststoff mit vergleichbaren Schalteigenschaften zu erhalten, muss folglich die Konzentration der Polymerpartikel im thermotropen Kunststoff erhöht werden, da nur Polymerphase A zum thermotropen Schalteffekt beiträgt. Das erhöht den Materialaufwand, wodurch in der Regel zusätzliche Kosten verursacht werden. Zudem kann eine höhere Partikelkonzentration die Materialeigenschaften des Matrixkunststoffs beeinträchtigen. 2) Eine zusätzliche Polymerphase kann die Transparenz des thermotropen Kunststoffs im OFF-Modus verringern. Aufgrund der unterschiedlichen chemischen Zusammensetzung weichen auch die Brechungsindizes von Polymerphase A und B sowie der Matrix mindestens geringfügig voneinander ab.

Wird auf Polymerphase A eine zweite Polymerphase B aufgepfropft, beträgt der Gewichtsanteil der Polymerphase B an der Gesamtmasse der erfindungsgemäßen Partikel zwischen 5 und 90 Gew.-%, bevorzugt zwischen 10 und 50 Gew.-%, insbesondere zwischen 15 und 35 Gew.-%.

Zum Aufpfropfen der Polymerphase B werden bei der Synthese der Polymerphase A bevorzugt Monomere III mit zwei unterschiedlich reaktiven, nicht konjugierten ethylenischen Doppelbindungen verwendet. In derartigen Pfropfvernetzern reagiert eine radikalisch polymerisierbare Doppelbindung (z.B. einer Methacrylgruppe) mit vergleichbarer Geschwindigkeit wie die Monomere I. Die zweite Doppelbindung (z.B. einer Allylgruppe) polymerisiert mit einer deutlich niedrigeren Geschwindigkeit, so dass am Ende der Polymerisation einige dieser Doppelbindungen unverändert erhalten bleiben. Auf diese Weise ist eine Pfropfvernetzung zwischen zwei Polymerphasen möglich.

Als pfropfaktive Monomere III eignen sich insbesondere Allyl-, Methallyl- und Crotylester α,β-ethylenisch ungesättigter Carbonsäuren und Dicarbonsäuren, bevorzugt Allyl(meth)acrylat und Diallylmaleat.

Die Polymerphase B der erfindungsgemäßen Polymerpartikel besteht zu 0 bis 100 Gew.-% aus einem oder mehreren Monomeren VI aus der Gruppe der C1-C10-Alkyl(meth)acrylate, zu 0 bis 100 Gew.-% aus einem oder mehreren (hetero)aromatischen, einfach ethylenisch ungesättigten Monomeren VII und zu 0 bis 50 Gew.-% aus einem oder mehreren sonstigen, einfach ethylenisch ungesättigter Monomeren VIII.

Die Monomerauswahl bzw. die Auswahl der Gewichtsanteile der Monomere VI bis VIII erfolgt vorzugsweise derart, dass die Brechungsindizes der Polymerphase B im Temperaturbereich des OFF-Modus mit denen der Polymerphase A und des jeweiligen Matrixkunststoffs sehr gut übereinstimmen. Idealerweise haben Polymerphase B und der Matrixkunststoff die gleiche Monomerzusammensetzung. Polymerphase B und Matrixkunstoff sind dann als eine Phase aufzufassen, so dass nur eine Phasengrenzfläche zwischen Partikelkern (Polymerphase A) und Partikelschale (Polymerphase B) existiert. Durch optimale Anpassung der Brechungsindizes beider Phasen kann im Temperaturbereich des OFF-Modus so eine Transparenz bzw. Transluzenz erreicht werden, die der des reinen Matrixkunststoffs annähernd entspricht.

Bevorzugte Monomere VI zum Aufbau von Polymerphase B sind Methyl-, Ethyl-, n-Propyl-, Isopropyl-, n-Butyl-, sec-Butyl-, Isobutyl-, tert-Butyl-, n-Hexyl-, n-Octyl-, 2-Ethylhexyl-, n-Decyl-, Isodecyl-, Cyclohexyl-, 4-tert-Butylcyclohexyl-, Isobornyl- und Dihydrodicyclopentadienyl-(meth)acrylat.

Als Monomere VII kommen die bereits genannten Monomere IV in Betracht.

Als Monomere VIII kommen die bereits genannten Monomere V in Betracht.

In einer bevorzugten Ausführungsform für Poly(meth)acrylat-Formmassen wird Polymerphase B durch Copolymerisation von 80 bis 99,99 Gew.-% Methylmethacrylat und von 0,01 bis 20 Gew.-% eines C1-C8-Alkylacrylats aufgebaut (Monomere VI).

Zum Aufbau der Polymerphase B werden die notwendigen Monomere nach Abschluss der Polymerisation von Polymerphase A zur wässrigen Dispersion der Polymerphase A gegeben. Die Monomere werden vorzugsweise unter solchen Bedingungen zugegeben, dass die Bildung neuer Partikel vermieden wird und sich die in dieser Polymerisationsstufe entstehende Polymerphase B als Schale um die Polymerphase A herum anlagert. Vorzugsweise werden die Monomere nach Maßgabe ihres Verbrauchs zugegeben.

Vorzugsweise werden die zum Aufbau der Polymerphase B notwendigen Monomeren als o/w-Makroemulsion zur wässrigen Dispersion der Polymerphase A gegeben. Zur Herstellung der o/w-Makroemulsion werden die Monomere mit einer wässrigen Tensidlösung durch z.B. einfaches mechanisches Rühren gemischt. Die wässrige Tensidlösung kann zusätzlich Puffersubstanzen enthalten, um den pH-Wert der wässrigen Phase im Hinblick auf die radikalische Polymerisation vorteilhaft zu gestalten.

Als Tenside kommen prinzipiell alle bereits genannten Tenside in Betracht. Vorzugsweise werden für beide Polymerisationsstufen (Polymerphase A und Polymerphase B) identische Tenside verwendet.

Die Tensidmenge in der zum Aufbau der Polymerphase B benötigten o/w-Makroemulsion wird vorzugsweise so gewählt, dass die kritische Mizellbildungskonzentration (cmc) des Tensids in der die Polymerphase A enthaltenden wässrigen Phase nicht überschritten wird, um das Risiko einer Partikelneubildung zu minimieren. In der Regel liegt die Tensidmenge im Bereich von 0,01 bis 2 Gew.-% bezogen auf die in der o/w-Makroemulsion enthaltene Menge an Monomeren.

Zum Aufbau der Polymerphase B werden vorzugsweise wasserlösliche radikalische Polymerisationsinitiatoren verwendet. Geeignete Initiatoren sind die bereits genannten wasserlöslichen radikalischen Polymerisationsinitiatoren.

Die Zugabe des wasserlöslichen radikalischen Polymerisationsinitiators kann auf einmal oder über einen längeren Zeitraum während der Polymerisation von Polymerphase B erfolgen. Alternativ kann auch ein Teil des Polymerisationsinitiators auf einmal und der verbleibende Teil über einen längeren Zeitraum zudosiert werden. Vorzugsweise wird der wasserlösliche radikalische Polymerisationsinitiator mit der o/w-Makroemulsion kontinuierlich zudosiert, entweder gemeinsam oder über einen separaten Zulauf.

Üblicherweise werden 0,01 bis 1 Gew.-% radikalischer Polymerisationsinitiator bezogen auf die zu polymerisierende Monomermenge eingesetzt.

Werden in der ersten Polymerisationsstufe beim Aufbau der Polymerphase A bereits wasserlösliche Polymerisationsinitiatoren verwendet, die während der zweiten Polymerisationsstufe noch in ausreichender Menge für den Aufbau der Polymerphase B zur Verfügung stehen, kann häufig auf eine erneute Zugabe wasserlöslicher Polymerisationsinitiatoren verzichtet werden.

Der Anteil der Monomerphase B an der Gesamtmasse der zu dosierenden o/w-Makroemulsion beträgt zwischen 10 und 80 Gew.-%, vorzugsweise zwischen 25 und 70 Gew.-%, insbesondere zwischen 35 und 60 Gew.-%.

Die Reaktionszeiten zum Aufbau der Polymerphase B betragen nach vollständiger Zugabe der Monomere gewöhnlich zwischen 0,25 bis 8 Stunden, meistens zwischen 0,5 bis 4 Stunden.

Im Anschluss an die eigentliche radikalische Polymerisationsreaktion ist es häufig von Vorteil, die resultierende Partikeldispersion von Restmonomeren und anderen flüchtigen organischen Bestandteilen weitgehend zu befreien. Dies kann beispielsweise durch Wasserdampfdestillation oder durch Abstreifen mit einem inerten Gas erfolgen. Ferner lässt sich der Restmonomerengehalt auch durch eine radikalische Nachpolymerisation reduzieren, die beispielsweise durch Zugabe der bereits genannten Redoxinitiatorsysteme initiiert werden kann. Weitere geeignete Methoden werden zum Beispiel in P. H. H. Araujo et al., Techniques for Reducing Residual Monomer Content in Polymers: A Review, Polymer Engineering and Science, July 2002, 42 (7), S. 1442-1468, beschrieben.

Optional können bei der Polymerisation der jeweiligen Polymerphase 0 bis 2 Gew.-% eines Molekulargewichtsreglers zugesetzt werden. Der Molekulargewichtsregler ist dann Bestandteil der jeweiligen Polymerphase. Molekulargewichtsregler begrenzen die Polymerkettenlänge. Auf diese Weise kann das Molekulargewicht der Polymerphase demjenigen der nachfolgenden Phase bzw. des Matrixkunststoffs angepasst werden.

Als Molekulargewichtsregler eignen sich beispielsweise C1-C18-Alkanthiole, wie 2-Ethylhexan-, 1-Dodecan- und 1-Octadecanthiol.

Die erfindungsgemäßen Polymerpartikel fallen nach Abschluss der Polymerisation in Form einer wässrigen Dispersion mit einem Feststoffgehalt von typischerweise 20 bis 50 Gew.-% an. Die erfindungsgemäßen Polymerpartikel können aus der wässrigen Dispersion beispielsweise durch Sprühtrocknung gewonnen werden. Diese Methode hat allerdings den Nachteil, dass die wasserlöslichen Polymerisationshilfsmittel nicht abgetrennt werden.

In einer bevorzugten Ausführungsform des Verfahrens werden die erfindungsgemäßen Polymerpartikel deshalb durch eine Abfolge aus Fällung/Koagulation, Filtration, Waschen und Trocknen gewonnen. Da aufgrund der geringen Primärpartikelgröße der erfindungsgemäßen Polymerpartikel ein direktes Filtrieren der Dispersion in der Regel sehr zeitaufwändig ist, werden die Primärpartikel vor dem Filtrieren ausgefällt/koaguliert. Dazu sind eine Reihe verschiedener Verfahren bekannt. So können Dispersionen beispielsweise durch Zugabe von starken Elektrolyten koaguliert werden. Bei der Salzkoagulation werden in der Regel Salze verwendet, die mehrwertige Kationen wie beispielsweise Ca2+, Mg2+ oder Al3+ enthalten. Ferner sind Methoden bekannt, die ohne die Zugabe von Salzen eine Koagulation von Polymerdispersionen initiieren, beispielsweise die Anwen-dung hoher Scherkräfte (Scherfällung) oder Einfrieren (Gefrierkoagulation).

In einem weiteren bevorzugten Verfahren zur Isolierung der erfindungsgemäßen Polymerpartikel werden spezielle Extrusionsverfahren angewendet, bei denen Koagulation, Entwässerung und Entgasung mit einem Schneckenextruder in nur einem Arbeitsschritt erfolgen (siehe z.B. DE 2917321). Dabei wird die Wasserphase ohne Hinterlassung von störenden Rückstandsmengen der wasserlöslichen, nichtflüchtigen Bestandteile abgetrennt. Man erhält das Polymerisat als geschmolzenen Strang, der anschließend granuliert werden kann. Diese Verfahren bieten zusätzlich die Möglichkeit, das Polymerisat direkt mit einer Formmasse als Matrixkunststoff zu vermischen, wodurch ein weiterer Arbeitsschritt entfällt.

Die mittleren Primärpartikeldurchmesser der erfindungsgemäßen Polymerpartikel werden zwischen 50 nm und 10 µm, bevorzugt zwischen 100 und 2000 nm, besonders bevorzugt zwischen 200 und 1000 nm gewählt. Partikeldurchmesser in diesem Größenbereich werden beispielsweise durch Laserbeugung ermittelt. Als mittlerer Primärpartikeldurchmesser wird der d50-Wert angegeben. d50 bedeutet dann, dass 50 Gew.-% der Partikel kleiner und Gew.-% der Partikel größer sind als der angegebene Wert. Primärpartikel bedeutet, dass vor der Größenmessung Verklumpungen/Anhaftungen der Partikel aneinander aufgebrochen werden.

Die erfindungsgemäßen Polymerpartikel können weiterhin 0 bis 10 Gew.-% anorganische Nanopartikel enthalten. Besonders geeignete Nanopartikel sind Silikate und Oxide der Elemente AI, Si, Zr, Hf, Ti, Zn, Pb sowie deren mögliche Mischoxide. Vorzugsweise liegt die Partikelgröße dieser anorganischen Nanopartikel im Bereich von 5 bis 50 nm. Durch diese Dotierung wird bei den erfindungsgemäßen Polymerpartikeln eine erweiterte Temperaturstabilität beobachtet.

Gegenstand der Erfindung ist auch ein Kunststoff, der bezogen auf sein Gesamtgewicht
A) 1 bis 80 Gew.-% der erfindungsgemäßen Polymerpartikel,
B) 20 bis 99 Gew.-% einer Matrix, bestehend aus
   i) 50 bis 100 Gew.-% wenigstens eines transparenten oder transluzenten Matrixkunststoffs und
   ii) 0 bis 50 Gew.-% weitere Zusatzstoffe
enthält.

Ein solcher Kunststoff ist dann ein thermotroper Kunststoff oder Formmasse, der die Lichtdurchlässigkeit bei Temperaturänderung reversibel verändert.

Besonders geeignete Matrixmaterialien sind Kunstoffpolymere wie Poly(meth)acrylate, Polycarbonate, Polyolefine, Polystyrole und Mischungen davon. Beispiele für geeignete Substanzen sind Polyethylen Standard-Homo- und Copolymere (z.B. PE-LD, PE-HD), vernetzte Polyethylen-Derivate (z.B. PE-X), Ethylen-Copolymere (PE-ULD, PE-VLD, EVA, EVOH, EBA, EEAK, EMA, EAMA, COC, EIM), Polypropylene (PP), Polystyrole (PS), Polystyrol-Copolymerisate (z.B. ABS, SAN), Polyvinylchloride (PVC), Polyvinylbutyrale (PVB), transparente Polyamide (PA), Polycarbonate (PC) und transparente PC-Blends, Polyethylenterephthalat (PET) und transparente PET-Blends, Polyethylennaphthalat (PEN), Polyarylsulfone (PSU), Polyethersulfone (PES), transparente Cellulose-Derivate (CA, CAB, CAP) sowie vorzugsweise aus Polymethacrylat Homo- und Copolymeren bzw. schlagzähen Modifizierungen (PMMA, AMMA, MBS, MABS, PMMI, PMMA-HI).

Als Matrixkunststoff eignen sich gängige transparente oder transluzente Formmassen, wie sie für die thermoplastische Verarbeitung verwendet werden. Sie werden ausgewählt aus der Gruppe der Polyethylen Standard-Homo- und Copolymere (z.B. PE-LD, PE-HD), der Ethylen-Copolymere (PE-ULD, PE-VLD, EVA, EVOH, EBA, EEAK, EMA, EAMA, COC, EIM), der Polypropylene (PP), der Styrolpolymere (PS, ABS, SAN), der Polyvinylchloride (PVC), der Polyvinylbutyrale (PVB), der thermoplastischen Polyurethane (TPU), der Polymethacrylat Homo- und Copolymere bzw. schlagzähe Modifizierungen (PMMA, AMMA, MBS, MABS, PMMI, PMMA-HI), der Polyamide (PA), der Polycarbonate (PC) und PC-Blends, der Polyester der Terephthalsäure (PET, PBT) und Blends, der Polyarylsulfone (PSU), der Polyethersulfone (PES) und der Cellulose-Derivate (CA, CAB, CAP).

Besonders geeignete transparente oder transluzente Formmassen aus diesen Gruppen sind Polymethylmethacrylat (PMMA), schlagzähe Varianten von PMMA (PMMA-HI), Methylmethacrylat-Copolymerisate (AMMA), Polymethacrylmethylimid (PMMI), transparente Polyamide (PA) auf Basis aromatischer Dicarbonsäuren oder verzweigter aliphatischer bzw. acyclischer Diamine, transparente Polyamide (PA) auf Basis von Dodecandisäure und einem cycloaliphatischen Diamin, Polycarbonat (PC) auf Basis von Bisphenol A, Polyethylenterephthalat (PET), Polystyrol (PS), Polyvinylbutyral (PVB) und thermoplastisches Polyurethan (TPU).

Zur Bestimmung der Transparenz des Matrixmaterials wird auf das in den Beispielen beschriebene Messverfahren zurückgegriffen.

In besonders einfacher Weise kann der thermotrope Kunststoff hergestellt werden, indem die erfindungsgemäßen Polymerpartikel mit der Formmasse als Matrixkunststoff und ggf. weiteren Zusatzstoffen durch Compoundieren, z.B. in einem Extruder oder Kneter, vermischt werden.

Die daraus resultierende thermotrope Formmasse kann mit den üblichen Verfahren zur Formung von Thermoplasten, wie z.B. Extrusion, Kalandrieren, Extrusions-Blasformen, Spritzgießen, Spritzprägen, Spritzgieß-Blasformen und Pressen, zu beliebigen Formkörpern, wie z.B. Massivplatten, Stegplatten, Wellplatten, Folien, Stäbe, Rohre oder dergleichen geformt werden.

Neben thermoplastischen Formmassen kommen auch weitere transparente oder transluzente Kunststoffe als Matrixkunststoff in Betracht. Hierzu zählen insbesondere härtbare Formmassen sowie härtbare Gieß- und Laminierharze. In beiden Fällen handelt es sich um Reaktionsharze, die durch Zugabe von chemischen Härtern, durch UV- oder Elektronenstrahlen oder durch höhere Temperaturen ausgehärtet werden. Geeignete Reaktionsharze zur Herstellung thermotroper Kunststoffe sind insbesondere transparente oder transluzente Formaldehyd-Harze, ungesättigte Polyester-Harze, Epoxid-Harze, Silikon-Harze, Diallylphthalat-Harze und Diallyldiglycolcarbonat.

Zur Herstellung von thermotropen PMMA kann neben der thermoplastischen Verarbeitung mit PMMA-Formmassen (Acrylglas XT) auch das so genannte Gießverfahren (Acrylglas GS) angewendet werden (DE 639095, siehe auch Ullmann's Encyclopedia of Industrial Chemistry, Polymethacrylates, Wiley-VCH Verlag GmbH & Co. KGaA, Weinheim, 2013, DOI: 10.1002/14356007.a21_473.pub2). Das Gießverfahren ist insbesondere dann von Bedeutung, wenn Produkte mit hoher optischer Qualität, Spiegelglas-ähnlicher Oberfläche und hoher Dicke verlangt werden. Als Vorstufe für thermotropes Acrylglas GS wird vorzugsweise ein Gemisch aus PMMA, Methylmethacrylat (MMA), den erfindungsgemäßen Polymerpartikeln, einem thermischen Polymerisationsinitiator und ggf. weiterer Zusätze wie (vernetzende) Comonomere, Stabilisatoren, etc. verwendet. Die Polymerisation erfolgt typischerweise in einer abgedichteten Flachkammer, die aus zwei Glasplatten mit einwandfreier Oberfläche und einem Abstandshalter besteht. Zum Polymerisieren wird die gefüllte Flachkammer in horizontaler oder vertikaler Lage für mehrere Stunden bei einem dem Umsatz angepassten Temperaturprogramm im Bereich von 20 bis 60°C erwärmt. Die Endpolymerisation erfolgt bei Temperaturen von 110 bis 130°C. Alternativ kann thermotropes Acrylglas auch durch ein kontinuierliches Gießverfahren, wie das Doppelband-Verfahren (US 3,376,371), hergestellt werden.

Grundsätzlich kann die thermotrope Formmasse weitere Inhaltsstoffe enthalten, beispielweise Gleitmittel, Antiblockmittel, Trennmittel, Stabilisatoren (Antioxidantien, Lichtschutzmittel, Wärmeschutzmittel), Antistatika, Flammschutzmittel, Farbmittel, Schlagzähmodifizierungsmittel, Weichmacher, Haftvermittler, Füllstoffe, Verstärkungsmittel, Treibmittel, etc. und Mischungen davon.

In besonders einfacher Weise kann die Formmasse hergestellt werden, in der das die erfindungsgemäßen Partikel mit der Matrix durch Compoundieren z.B. in einem Extruder oder Kneter vermischt werden.

Die erfindungsgemäßen thermotropen Kunststoffe können selbstverständlich auch zur Herstellung von Verbundmaterialien verwendet werden. Hierzu wird der thermotrope Kunststoff mit weiteren Werkstoffen, wie Glas, Kunststoff, Holz, Metall und dergleichen verbunden, so dass Verbundmaterialien, wie beispielsweise Mehrschichtfolien, Verbundgläser, mit einer thermotropen Haftfolie oder einem thermotropen Lack beschichtete Gläser erhalten werden. Je nach Matrixkunststoff können dafür die gängigen Verfahren angewendet werden, wie z.B. Coextrusion, Mehrkomponenten-Spritzgießen, Verkleben, Laminieren, Gießen, Spritzen, Rakeln, Fluten und dergleichen.

Die erfindungsgemäße Formmasse kann dann zur Herstellung von Endprodukten verwendet werden, beispielweise durch Extrusion oder Spritzguss, um Formkörper wie Massivplatten, Stegplatten, Wellplatten, Folien, Rohre oder dergleichen zu erhalten.

Diese daraus erhältlichen Formkörper eignen sich beispielweise als Überhitzungs- und Blendschutz in Wintergärten, in Gewächshäusern, bei Carports oder auch in der Gebäudeverglasung.

Die thermotropen Kunststoffe und die daraus hergestellten thermotropen Formkörper oder Kunststoffteile eignen sich beispielweise für Verglasungen von Gebäuden, Fahrzeugen, Wintergärten, Treib- und Gewächshäusern; für Glasfassaden, Glasfassadenelemente und Vorhangfassaden; für Sonnenschutzglas und lichtlenkendes Sonnenschutzglas; für Isolierglas, Wärmeschutzglas und Isolierplatten; für Verbundglas, Sicherheits- und Schallschutzverbundglas; für Carports, Balkonverglasungen, Terrassenüberdachungen, Glashäuser, Schwimmbadhallenverglasungen und - dächer; für Dach-, Überkopf- und Oberlichtverglasungen; für Industrieverglasungen; für Lichtbauelemente, Lichtkuppeln, Lichtbänder und Tonnengewölbe; für Profilbauglas, Hohlkammerscheiben und Paneele; für die transparente Wärmedämmung; als Abdeckungen für Solarkollektoren und Photovoltaik-Module; für Sonnenschutzfolien und -lacke; für Agrar- und Gewächshausfolien; als Laminierfolie für beispielsweise Verbundglas; für Innenraumverglasungen, Trennwände, Raumteiler, Duschkabinen, Glastüren und Glasschiebetüren; für Dekorglas; für Leuchtenabdeckungen, Lampenschirme, Reflektoren und Lichtleiter; für optische Linsen und Brillengläser bzw. deren Beschichtungen; für die Lichtwerbung und Leuchtreklame; für Verkehrs- und Hinweisschilder und für Verpackungen.
Figur 1 zeigt eine Rasterelektronenmikroskop-Aufnahme des koagulierten trockenen Polymerisats aus Beispiel 1. Der mittlere Primärpartikeldurchmesser d50 des Polymerisats liegt im Bereich von 100 bis 400 nm.
Figur 2 zeigt zwei Messanordnungen, die für die optische Probencharakterisierung herangezogen wurden.
Figur 3 zeigt die Spektren der normal-hemisphärischen Transmission anhand von Beispiel 9.
Figur 4 zeigt die aus den Transmissionsspektren berechneten Transmissionswerte der normal-normalen, sichtbaren Transmission (Tvisₙₙ) gegen die Temperatur.

Die Erfindung wird durch die nachfolgenden Beispiele näher erläutert.

### Beispiel 1 - Herstellung der erfindungsgemäßen Polymerpartikel

Für Beispiel 1 wurden erfindungsgemäße Polymerpartikel hergestellt, die als thermotropes Additiv für Polymethylmethacrylat (PMMA) als Matrixkunststoff verwendet werden können. Sie eignen sich sowohl für die thermoplastische Verarbeitung mit kommerziellen PMMA-Formmassen (Acrylglas XT, Beispiele 6 und 7) als auch für die Herstellung von PMMA-Gusskörpern (Acrylglas GS, Beispiele 8 und 9). Die erfindungsgemäßen zweiphasigen Polymerpartikel bestehen aus den Polymerphasen A und B im Gewichtsverhältnis von A/B = 75/25 Gew.-% (bezogen auf die eingesetzten Mengen an Monomeren). Erfindungsgemäße Polymerpartikel, die nur aus einer Polymerphase A bestehen, eignen sich gewöhnlich nicht für eine thermoplastische Verarbeitung mit PMMA-Formmassen. Aufgrund der meist unzureichenden Verträglichkeit der Polymerphase A mit PMMA-Formmassen, zeigen entsprechende Formkörper häufig permanente Trübungen, Inhomogenitäten und zahlreiche Partikelagglomerate als Schadensbild.

Die Monomerzusammensetzung beider Polymerphasen ist in den Tabellen 1 und 2 angegeben. Die Zusammensetzung von Polymerphase A wurde so gewählt, dass die zugehörigen thermotropen PMMA-Formkörper bzw. Gusskörper ihre Lichtdurchlässigkeit hauptsächlich im Temperaturbereich von 30 bis 40°C reversibel ändern. Ganz allgemein gilt, dass für eine Schalttemperatur von 30 bis 40°C nur diejenigen Monomere I oder Gemische aus zwei oder mehreren Monomeren I in Betracht kommen, deren Homo- bzw. Copolymere eine Phasenübergangstemperatur Tₘ oberhalb der Schalttemperatur aufweisen, da durch Copolymerisation mit weiteren Monomeren aus den Gruppen II bis V der Tₘ abgesenkt wird. Für Polymerphase A wurde deshalb ODA als Monomer I ausgewählt. Die Phasenübergangstemperatur des Homopolymers p(ODA) liegt mit Tₘ ≈ 50°C (siehe K. A. O'Leary, D. R. Paul, Physical properties of poly(n-alkyl acrylate) copolymers, Part 1. Crystalline/crystalline combinations, Polymer 2006, 47, S. 1226-1244) ca. 10 bis 20 K oberhalb der für eine Schalttemperatur von 30 bis 40°C erforderlichen Phasenübergangstemperatur. Die Phasenübergangstemperatur von Polymerphase A wird deshalb durch Copolymerisation mit BA (Monomer II) reduziert. Dabei ist zu beachten, dass auch die übrigen Monomeren III bis V zur Absenkung von Tₘ beitragen. Für die Pfropfvernetzung beider Polymerphasen A und B wurde ALMA (Monomer III) mit einpolymerisiert. Um PMMA-Form- bzw. PMMA-Gusskörper mit hoher Transparenz im Temperaturbereich des OFF-Modus zu erhalten, wurde der Brechungsindex der Polymerphase A durch Copolymerisation mit Styren (Monomer IV) an den der PMMA-Matrix (n_{D}²⁰ = 1,49) angeglichen. Als fünfte Komponente der Polymerphase A wurde HEMA (Monomer V) mit einpolymerisiert. Dadurch konnten die Herstellungs- und Verarbeitungseigenschaften der erfindungsgemäßen Polymerpartikel verbessert werden.

Für Polymerphase B wurde eine Zusammensetzung gewählt, die der von kommerziellen PMMA-Formmassen typischerweise entspricht. Dies verbessert zum einen die Verträglichkeit der erfindungsgemäßen Partikel mit der PMMA-Matrix; zum anderen kann so eine optimale Übereinstimmung der Brechungsindizes von Polymerphase B und Matrixkunstoff erreicht werden, was die Transparenz im OFF-Modus entscheidend verbessert. Zur Herstellung kommerzieller PMMA-Formmassen werden neben MMA als Hauptmonomer meist kleine Mengen Acrylate als Comonomere verwendet (z.B. EA), die der Formmasse eine leichte Verarbeitbarkeit und eine höhere Thermostabilität verleihen.

### Ausgangsstoffe

**Tabelle 1: Monomerphase A zum Aufbau der Polymerphase A.**

| **Substanz** | **Masse [g]** | **Anteil [Gew.-%]¹** | **Monomer²** |
|---|---|---|---|
| ODA | 48,00 | 80,0 | I |
| BA | 4,20 | 7,0 | II |
| ALMA | 2,40 | 4,0 | III |
| Styren | 3,00 | 5,0 | IV |
| HEMA | 2,40 | 4,0 | V |

| | | | |
|---|---|---|---|
| 1: Bezogen auf Monomerphase A. 2: Gemäß der erfindungsgemäßen Klassifizierung. | | | |

Für die radikalische Polymerisation der Monomerphase A wurden 0,60 g LPO als öllöslicher Polymerisationsinitiator verwendet.

Die zugehörige wässrige Phase A setzt sich zusammen aus 0,30 g SDS, 0,075 g NaHCO₃ und 140 g Reinstwasser.

**Tabelle 2: Monomerphase B zum Aufbau der Polymerphase B.**

| **Substanz** | **Masse [g]** | **Anteil [Gew.-%]¹** | **Monomer²** |
|---|---|---|---|
| MMA | 19,20 | 96 | VI |
| EA | 0,80 | 4 | VI |

| | | | |
|---|---|---|---|
| 1: Bezogen auf Monomerphase B. 2: Gemäß der erfindungsgemäßen Klassifizierung. | | | |

Die zugehörige wässrige Phase B setzt sich zusammen aus 0,020 g SDS, 0,010 g NaHCO₃, 0,020 g NaPDS und 20 g Reinstwasser.

### Verwendete Geräte

Ultraschallhomogenisierung: HIELSCHER Ultraschallreaktor UP200S mit Sonotrode S14 und den Einstellungen Amplitude 100% und Cycle 1.

Dosierpumpe: HEIDOLPH Pumpenantrieb PD 5101, Pumpenkopf SP QUICK D 1,6, TYGON 2001-Schlauch 0,8/1,6, Dosierung bei Stufe 10.

Vakuum-Filtration: Filter MACHERY-NAGEL MN 640 W (mittelschnell, 150 mm Durchmesser), Kunststofffritte (150 mm Durchmesser), 1000 mL Saugflasche, Membranpumpe.

### Durchführung

Eine auf 35°C temperierte, wässrige Phase A wurde vorgelegt. Monomer I wurde in einem Umluft-Trockenschrank bei 60°C vollständig geschmolzen. Die Monomere II bis V wurden in einem Wasserbad (35°C) vortemperiert und unter magnetischem Rühren mit dem flüssigen Monomer I vereint. Die resultierende Monomerphase A wurde noch 15 min unter fortlaufendem Rühren bei 35°C temperiert. Unmittelbar vor der Vereinigung von Monomerphase A und wässriger Phase A wurde der öllösliche Initiator zur Monomerphase A gegeben und unter magnetischem Rühren vollständig gelöst. Die vereinigten Phasen wurden bei 35°C 10 min durch kräftiges Rühren mit einem Magnetrührer zu einer o/w-Makroemulsion vordispergiert. Im Anschluss wurde die o/w-Makroemulsion 30 min mit Ultraschall zu einer o/w-Miniemulsion homogenisiert. Während der Ultraschallbehandlung wurde mit einem Wasserbad (25°C) gekühlt und die Innentemperatur kontrolliert. Zusätzlich wurde die Emulsion mit einem Magnetrührer gerührt, um eine weitgehend gleichmäßige Temperaturverteilung zu gewährleisten. Während der Ultraschallbehandlung lag die Innentemperatur im Bereich von 30 bis 45°C. Nach der Ultraschallbehandlung wurde die o/w-Miniemulsion in ein auf 35°C vortemperiertes Polymerisationsgefäß überführt. Als Polymerisationsgefäß wurde ein 500 mL Dreihalskolben mit Rückflusskühler, Schutzgaszulauf und KPG-Rührer verwendet. Die Drehzahl des KPG-Rührers wurde mit einem Elektronik-Rührer auf 300 upm eingestellt. Zum Erwärmen des Polymerisationsgefäßes wurde ein temperierbares Ölbad mit Heizrührplatte verwendet. Für eine gleichmäßige Temperaturverteilung im Ölbad wurde magnetisch gerührt. Die o/w-Miniemulsion wurde bei 35°C Ölbadtemperatur und unter Rühren 15 min im Schutzgasstrom (Argon) entgast. Der Schutzgasstrom wurde reduziert und die Miniemulsion auf 85°C erwärmt. Anschließend wurde noch 120 min bei 85°C und konstanter Drehzahl polymerisiert. Während der zweistündigen Polymerisationszeit von Polymerphase A wurde die o/w-Makroemulsion für Polymerphase B hergestellt. Hierzu wurde die Monomerphase B mit der wässrigen Phase B vereint und mit einem Magnetrührer 30 min kräftig gerührt. Die resultierende o/w-Makroemulsion wurde nach Ablauf der zweistündigen Polymerisationszeit von Polymerphase A über einen Zeitraum von 45 min mit einer Dosierpumpe bei 85°C zugetropft. Nach vollständiger Zugabe wurde noch 120 min bei 85°C und konstanter Drehzahl gerührt. Anschließend wurde das Ölbad entfernt und die Partikeldispersion koaguliert. Zu diesem Zweck wurde die noch warme Dispersion in ein Becherglas überführt und unter kräftigem Rühren mit einem Magnetrührer mit 150 mL einer 0,5 Gew.-%igen Magnesiumsulfat-Lösung versetzt. Das Koagulat wurde unter Vakuumbedingungen filtriert. Der verbleibende Filterrückstand wurde noch fünfmal mit je 250 mL Wasser gewaschen, um alle wasserlöslichen Polymerisationshilfsmittel möglichst vollständig zu entfernen. Das feuchte Polymerisat wurde bis zur Massenkonstanz unter dem Abzug getrocknet. Es wurden 73,4 g eines farblosen Feststoffs erhalten.

### Partikelanalytik

Das trockene Polymerisat aus Beispiel 1 wurde mittels dynamischer Differenzkalorimetrie an einem PERKIN ELMER DSC 4000 charakterisiert. Im Temperaturbereich von -20 bis 120°C und bei einer Heiz- bzw. Kühlrate von 10 K/min wurden zwei Heizkurven und eine Kühlkurve aufgenommen (Abfolge: Heizkurve 1, Kühlkurve 1, Heizkurve 2). Für die Auswertung wurden Kühlkurve 1 und Heizkurve 2 herangezogen. Es wird ein Phasenübergang 1. Ordnung gefunden. Kühlkurve 1: Onset-Temperatur = 34,4°C, Peak-Temperatur = 30,3°C, Delta H = -39,2 J/g; Heizkurve 2: Onset-Temperatur = 30,7°C, Peak-Temperatur = 39,0°C, Delta H = 39,4 J/g.

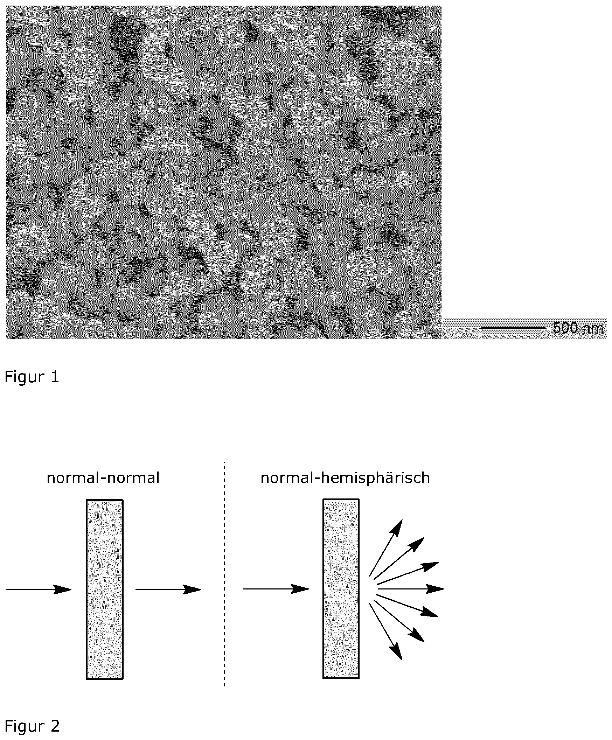

Figur 1 zeigt eine Rasterelektronenmikroskop-Aufnahme des koagulierten trockenen Polymerisats aus Beispiel 1. Der mittlere Primärpartikeldurchmesser d50 des Polymerisats liegt im Bereich von 100 bis 400 nm.

In den nachfolgenden Beispielen 2 bis 5 wird die Herstellung weiterer erfindungsgemäßer Polymerpartikel mit unterschiedlicher Phasenübergangstemperatur dokumentiert.

### Beispiel 2 - Herstellung der erfindungsgemäßen Polymerpartikel

### Ausgangsstoffe

**Tabelle 3: Monomerphase A zum Aufbau der Polymerphase A.**

| **Substanz** | **Masse [g]** | **Anteil [Gew.-%]¹** | **Monomer²** |
|---|---|---|---|
| DCA | 42,00 | 70,0 | I |
| BA | 12,60 | 21,0 | II |
| ALMA | 2,40 | 4,0 | III |
| HEMA | 3,00 | 5,0 | V |

| | | | |
|---|---|---|---|
| 1: Bezogen auf Monomerphase A. 2: Gemäß der erfindungsgemäßen Klassifizierung. | | | |

Für die radikalische Polymerisation der Monomerphase A wurden 0,30 g AIBN als öllöslicher Polymerisationsinitiator verwendet.

Die zugehörige wässrige Phase A setzt sich zusammen aus 0,30 g SDS, 0,075 g NaHCO₃ und 140 g Reinstwasser.

**Tabelle 4: Monomerphase B zum Aufbau der Polymerphase B.**

| **Substanz** | **Masse [g]** | **Anteil [Gew.-%]¹** | **Monomer²** |
|---|---|---|---|
| MMA | 19,00 | 95 | VI |
| EA | 1,00 | 5 | VI |

| | | | |
|---|---|---|---|
| 1: Bezogen auf Monomerphase B. 2: Gemäß der erfindungsgemäßen Klassifizierung. | | | |

Die zugehörige wässrige Phase B setzt sich zusammen aus 0,020 g SDS, 0,010 g NaHCO₃, 0,020 g NaPDS und 20 g Reinstwasser.

### Durchführung

Die Durchführung erfolgte analog zu Beispiel 1 mit folgenden Änderungen:
Monomer I wurde in einem Umluft-Trockenschrank bei 80°C vollständig geschmolzen.

Die wässrige Phase A, die Monomerphase A sowie die aus beiden Phasen hergestellte o/w-Makroemulsion wurden bei 45°C temperiert. Während der Ultraschallbehandlung wurde die Emulsion mit einem Wasserbad (35°C) gekühlt. Die Innentemperatur lag dabei im Bereich von 40 bis 55°C. Nach der Ultraschallbehandlung wurde die o/w-Miniemulsion in ein auf 45°C vortemperiertes Polymerisationsgefäß überführt.

Der zum Aufbau der Polymerphase A benötigte Polymerisationsinitiator AIBN wurde erst nach der Ultraschallbehandlung zur o/w-Miniemulsion bei 45°C gegeben.

Es wurden 71,9 g eines farblosen Feststoffs erhalten.

### Partikelanalytik

Die Partikelanalytik erfolgte mittels DSC analog zu Beispiel 1. Für die Auswertung wurde Heizkurve 2 herangezogen. Es wird ein Phasenübergang 1. Ordnung gefunden. Heizkurve 2: Onset-Temperatur = 46,5°C, Peak-Temperatur = 52,8°C, Delta H = 47,5 J/g.

### Beispiel 3 - Herstellung der erfindungsgemäßen Polymerpartikel

### Ausgangsstoffe

**Tabelle 5: Monomerphase A zum Aufbau der Polymerphase A.**

| **Substanz** | **Masse [g]** | **Anteil [Gew.-%]¹** | **Monomer²** |
|---|---|---|---|
| ODA | 27,00 | 45,0 | I |
| HDA | 27,00 | 45,0 | I |
| ALMA | 2,40 | 4,0 | III |
| BzMA | 1,20 | 2,0 | IV |
| HPA | 2,40 | 4,0 | V |

| | | | |
|---|---|---|---|
| 1: Bezogen auf Monomerphase A. 2: Gemäß der erfindungsgemäßen Klassifizierung. | | | |

Für die radikalische Polymerisation der Monomerphase A wurden 0,60 g LPO als öllöslicher Polymerisationsinitiator verwendet.

Die zugehörige wässrige Phase A setzt sich zusammen aus 0,30 g SDS, 0,075 g NaHCO₃ und 140 g Reinstwasser.

**Tabelle 6: Monomerphase B zum Aufbau der Polymerphase B.**

| **Substanz** | **Masse [g]** | **Anteil [Gew.-%]¹** | **Monomer²** |
|---|---|---|---|
| MMA | 19,20 | 96 | VI |
| EA | 0,80 | 4 | VI |

| | | | |
|---|---|---|---|
| 1: Bezogen auf Monomerphase B. 2: Gemäß der erfindungsgemäßen Klassifizierung. | | | |

Die zugehörige wässrige Phase B setzt sich zusammen aus 0,020 g SDS, 0,010 g NaHCO₃, 0,020 g NaPDS und 20 g Reinstwasser.

### Durchführung

Die Durchführung erfolgte analog zu Beispiel 1 mit folgenden Änderungen:
Beide Monomere I wurden gemeinsam in einem Umluft-Trockenschrank bei 60°C vollständig geschmolzen.

Nach der Polymerisation wurde die Partikeldispersion durch Einfrieren koaguliert. Zu diesem Zweck wurde die Partikeldispersion für 24 Stunden in einem Gefrierschrank bei -18°C gelagert. Nach dem Auftauen wurde das Koagulat analog zu Beispiel 1 filtriert, gewaschen und getrocknet.

Es wurden 75,2 g eines farblosen Feststoffs erhalten.

### Partikelanalytik

Die Partikelanalytik erfolgte mittels DSC analog zu Beispiel 1. Für die Auswertung wurde Heizkurve 2 herangezogen. Es wird ein Phasenübergang 1. Ordnung gefunden. Heizkurve 2: Onset-Temperatur = 30,9°C, Peak-Temperatur = 37,3°C, Delta H = 48,7 J/g.

### Beispiel 4 - Herstellung der erfindungsgemäßen Polymerpartikel

### Ausgangsstoffe

**Tabelle 7: Monomerphase A zum Aufbau der Polymerphase A.**

| **Substanz** | **Masse [g]** | **Anteil [Gew.-%]¹** | **Moomer²** |
|---|---|---|---|
| DCA | 54,00 | 90,0 | I |
| ALMA | 2,40 | 4,0 | III |
| HPA | 3,60 | 6,0 | V |

| | | | |
|---|---|---|---|
| 1: Bezogen auf Monomerphase A. 2: Gemäß der erfindungsgemäßen Klassifizierung. | | | |

Für die radikalische Polymerisation der Monomerphase A wurden 0,60 g BPO (75%, in Wasser) als öllöslicher Polymerisationsinitiator verwendet.

Die zugehörige wässrige Phase A setzt sich zusammen aus 0,30 g SDS, 0,075 g NaHCO₃ und 140 g Reinstwasser.

**Tabelle 8: Monomerphase B zum Aufbau der Polymerphase B.**

| **Substanz** | **Masse [g]** | **Anteil [Gew.-%]¹** | **Monomer²** |
|---|---|---|---|
| MMA | 12,30 | 82 | VI |
| Styren | 2,70 | 18 | VII |

| | | | |
|---|---|---|---|
| 1: Bezogen auf Monomerphase B. 2: Gemäß der erfindungsgemäßen Klassifizierung. | | | |

Die zugehörige wässrige Phase B setzt sich zusammen aus 0,015 g SDS, 0,0075 g NaHCO₃, 0,015 g NaPDS und 15 g Reinstwasser.

Das Gewichtsverhältnis aus den Polymerphasen A und B beträgt demzufolge A/B = 80/20 Gew.-% (bezogen auf die eingesetzten Mengen an Monomeren).

### Durchführung

Die Durchführung erfolgte analog zu Beispiel 1 mit folgenden Änderungen:
Monomer I wurde in einem Umluft-Trockenschrank bei 80°C vollständig geschmolzen.

Die wässrige Phase A, die Monomerphase A sowie die daraus hergestellte o/w-Makroemulsion wurden bei 50°C temperiert. Während der Ultraschallbehandlung wurde die Emulsion mit einem Wasserbad (40°C) gekühlt. Die Innentemperatur lag dabei im Bereich von 40 bis 60°C. Nach der Ultraschallbehandlung wurde die o/w-Miniemulsion in ein auf 50°C vortemperiertes Polymerisationsgefäß überführt.

Der zum Aufbau der Polymerphase A benötigte Polymerisationsinitiator BPO wurde erst nach der Ultraschallbehandlung bei 50°C zur o/w-Miniemulsion gegeben.

Die o/w-Makroemulsion der Monomerphase B wurde über einen Zeitraum von 35 min zugetropft.

Es wurden 67,9 g eines farblosen Feststoffs erhalten.

### Partikelanalytik

Die Partikelanalytik erfolgte mittels DSC analog zu Beispiel 1. Für die Auswertung wurde Heizkurve 2 herangezogen. Es wird ein Phasenübergang 1. Ordnung gefunden. Heizkurve 2: Onset-Temperatur = 58,8°C, Peak-Temperatur = 63,7°C, Delta H = 67,8 J/g.

### Beispiel 5 - Herstellung der erfindungsgemäßen Polymerpartikel

### Ausgangsstoffe

**Tabelle 9: Monomerphase A zum Aufbau der Polymerphase A.**

| **Substanz** | **Masse [g]** | **Anteil [Gew.-%]¹** | **Monomer²** |
|---|---|---|---|
| DCA | 33,00 | 55,0 | I |
| ODA | 22,20 | 37,0 | I |
| ALMA | 2,40 | 4,0 | III |
| HPA | 2,40 | 4,0 | V |

| | | | |
|---|---|---|---|
| 1: Bezogen auf Monomerphase A. 2: Gemäß der erfindungsgemäßen Klassifizierung. | | | |

Für die radikalische Polymerisation der Monomerphase A wurden 0,30 g AIBN als öllöslicher Polymerisationsinitiator verwendet.

Die zugehörige wässrige Phase A setzt sich zusammen aus 0,30 g SDS, 0,075 g NaHCO₃ und 140 g Reinstwasser.

**Tabelle 10: Monomerphase B zum Aufbau der Polymerphase B.**

| **Substanz** | **Masse [g]** | **Anteil [Gew.-%]¹** | **Monomer²** |
|---|---|---|---|
| MMA | 19,60 | 98 | VI |
| BA | 0,40 | 2 | VI |

| | | | |
|---|---|---|---|
| 1: Bezogen auf Monomerphase B. 2: Gemäß der erfindungsgemäßen Klassifizierung. | | | |

Die zugehörige wässrige Phase B setzt sich zusammen aus 0,020 g SDS, 0,010 g NaHCO₃, 0,020 g NaPDS und 20 g Reinstwasser.

### Durchführung

Die Durchführung erfolgte analog zu Beispiel 1 mit folgenden Änderungen:
Beide Monomere I wurden gemeinsam in einem Umluft-Trockenschrank bei 80°C vollständig geschmolzen.

Die wässrige Phase A, die Monomerphase A sowie die daraus hergestellte o/w-Makroemulsion wurden bei 50°C temperiert. Während der Ultraschallbehandlung wurde die Emulsion mit einem Wasserbad (40°C) gekühlt. Die Innentemperatur lag dabei im Bereich von 40 bis 60°C. Nach der Ultraschallbehandlung wurde die o/w-Miniemulsion in ein auf 50°C vortemperiertes Polymerisationsgefäß überführt.

Der zum Aufbau der Polymerphase A benötigte Polymerisationsinitiator AIBN wurde erst nach der Ultraschallbehandlung bei 50°C zur o/w-Miniemulsion gegeben.

Es wurden 76,1 g eines farblosen Feststoffs erhalten.

### Partikelanalytik

Die Partikelanalytik erfolgte mittels DSC analog zu Beispiel 1. Für die Auswertung wurde Heizkurve 2 herangezogen. Es wird ein Phasenübergang 1. Ordnung gefunden. Heizkurve 2: Onset-Temperatur = 48,3°C, Peak-Temperatur = 52,8°C, Delta H = 57,1 J/g.

### Beispiel 6 - Thermotrope PMMA-Formmasse und Formkörper

Zur Herstellung einer erfindungsgemäßen thermotropen Formmasse wurden die Polymerpartikel aus Beispiel 1 bei Temperaturen zwischen 220 und 250°C mit einer schlagzähmodifizierten PMMA-Formmasse (LUCITE DIAKON CLH952 und IM 9386 im Verhältnis 60 zu 40 Gew.-%) schmelzgemischt. Zum Schmelzmischen wurde ein 10-Zonen-Doppelschneckenextruder (COPERION ZSK 18) verwendet. Der heiße Compoundstrang der thermotropen PMMA-Formmasse ist beim Verlassen der Extruderdüse intensiv weißtrüb. Nach dem Abkühlen auf Raumtemperatur klart er deutlich sichtbar auf. Der kalte Compoundstrang wurde im Anschluss granuliert.

Das granulierte Compound wurde nachfolgend auf einem Spritzgussautomaten (ENGEL VIKTORY 200/50 Focus) bei Temperaturen von 240 bis 260°C zu Massivplatten der Dimension 60 x 60 x 2 mm weiterverarbeitet.

### Beispiel 7 - Thermotrope PMMA-Formmasse und Formkörper

Zur Herstellung einer erfindungsgemäßen thermotropen Formmasse wurden Polymerpartikel identischer Zusammensetzung mit der schlagzähmodifizierten PMMA-Formmasse PLEXIGLAS zk4HC (EVONIK) bei Temperaturen von 210 bis 250°C schmelzgemischt. Zum Schmelzmischen wurde ein Doppelschnecken-Tischcompounder mit gleichlaufendem Schneckensatz (COLLIN ZK 25 T, TEACH-LINE) verwendet. Nach dem Abkühlen auf Raumtemperatur wurde der Compoundstrang granuliert.

Das granulierte Compound wurde mit einer Labor-Plattenpresse (COLLIN P 200 M) zu einer Massivplatte der Dimension 50 x 50 x 4 mm weiterverarbeitet. Das Granulat wurde zwischen zwei Kapton-Schutzfolien in der Öffnung eines Pressrahmens verteilt und anschließend zwischen zwei verchromten und hochglanzpolierten Messingplatten bei einer Temperatur von 220°C und einem Druck von 200 bar verpresst.

### Beispiel 8 - Thermotrope PMMA-Massivplatte nach dem Gießverfahren

Zur Herstellung einer erfindungsgemäßen gegossenen PMMA-Massivplatte (Acrylglas GS) mit thermotropen Eigenschaften wurde das industrielle Flachkammerverfahren in vereinfachter Ausführung genutzt. Für die Polymerisation im Labormaßstab diente eine einfache Kammer, die aus zwei Floatglasscheiben (100 x 100 x 5 mm), einer 3 mm dicken PVC-Schnur als Abstandshalter und vier Foldback-Klammern gebildet wird. Als PMMA-Vorstufe wurde ein Präpolymer aus 10 Gew.-% der Formmasse PLEXIGLAS 7N und 90 Gew.-% des Monomers MMA verwendet. Ein Gemisch aus 15 Gew.-% der erfindungsgemäßen Polymerpartikel und 85 Gew.-% Präpolymer wurde 60 min mit einem Magnetrührer bei hoher Drehzahl zu einer homogenen Partikel/Präpolymer-Dispersion gemischt. Anschließend wurden 0,2 Gew-% (bezogen auf die Gesamtmasse der Partikel/Präpolymer-Dispersion) des Polymerisationsinitiators LPO unter Rühren hinzugegeben. Es wurde noch weitere 10 min gerührt. Die resultierende thermisch härtbare Partikel/Präpolymer-Dispersion wurde in die Kammer gefüllt und zum Polymerisieren 16 Stunden in vertikaler Lage bei 58°C in einem Umluft-Trockenschrank erwärmt. Die Endpolymerisation erfolgte bei 110°C für 2 Stunden. Anschließend wurde die thermotrope PMMA-Massivplatte aus der Kammer isoliert. Sie hat eine Schichtdicke von 2,9 mm.

### Beispiel 9 - Thermotrope PMMA-Massivplatte nach dem Gießverfahren

Es wurde analog zu Beispiel 8 verfahren, jedoch wurde als Abstandshalter für die Kammer eine PVC-Schnur mit einem Durchmesser von 5 mm verwendet. Die Schichtdicke der so hergestellten thermotropen PMMA-Massivplatte beträgt 4,6 mm.

### Optische Charakterisierung der Beispiele 6 bis 9

Der spritzgegossene PMMA-Formköper (Beispiel 6), der gepresste PMMA-Formkörper (Beispiel 7) und die beiden gegossenen PMMA-Massivplatten (Beispiele 8 und 9) wurden durch temperaturabhängige Messungen der Transmission im Wellenlängenbereich des Solarspektrums (280 - 2500 nm) optisch charakterisiert. Figur 2 zeigt beide Messanordnungen, die für die optische Probencharakterisierung herangezogen wurden. In beiden Fällen trifft der Eingangsstrahl im rechten Winkel auf den Probenkörper. Wird nur der gerichtete Strahlungsanteil im Ausfallswinkel 90° detektiert, spricht man von normal-normaler Transmission (Tₙₙ). Im Unterschied dazu wird bei einer normal-hemisphärischen Transmissionsmessung (Tₙₕ) neben dem gerichteten Anteil auch die gesamte vorwärts gestreute (diffuse) Strahlung detektiert. Die normalhemisphärische Transmission gibt damit die Gesamttransmission des Probenkörpers an.

Sämtliche Transmissionsmessungen wurden mit einem Zweistrahl-Spektrophotometer der Firma JASCO (V-670) durchgeführt. Für normalhemisphärische Messungen wurde eine 60 mm Ulbrichtkugel mit Festprobenhalter der Firma JASCO verwendet.

Die Probenkörper wurden in einem thermostatisierbaren Probenhalter mindestens 20 min bei der jeweiligen Temperatur temperiert. Der OFF-Modus wurde bei 25°C, der ON-Modus bei 85°C gemessen.

Aus den gemessenen Spektren wurden unter Berücksichtigung der spektralen Verteilung des sichtbaren Lichtes (vis) bzw. der Solarstrahlung (sol) die integrierten prozentualen Transmissionswerte Tvis und Tsol berechnet (nach DIN EN 410: Bestimmung der lichttechnischen und strahlungsphysikalischen Kenngrößen von Verglasungen, European Standard EN 410, Deutsche Fassung, European Committee for Standardization, Brüssel, 1998).

Auf der Basis der folgenden Kenngrößen der Strahlungstransmission wurde eine Beurteilung der thermotropen Schalteigenschaften der Proben vorgenommen:
Tvisₙₙ, Tvisₙₕ = Prozentualer normal-normaler (nn) bzw. normal-hemisphärischer (nh) Transmissionsgrad im sichtbaren Wellenlängenbereich (380 - 780 nm) unter Berücksichtigung des spektralen Hellempfindlichkeitsgrades und der normierten relativen spektralen Strahlungsverteilung der Normlichtart D65.
Tsolₙₕ = Prozentualer normal-hemisphärischer (nh) Transmissionsgrad im solaren Wellenlängenbereich (300 - 2500 nm) unter Berücksichtigung der normierten relativen spektralen Verteilung der Globalstrahlung.
ΔT_{abs} = Absolute Differenz des jeweiligen Transmissionsgrads zwischen OFF- und ON-Modus berechnet nach ΔT_{abs} = T(OFF) - T(ON).
ΔTᵣₑₗ = Relative Differenz des jeweiligen Transmissionsgrads zwischen OFF- und ON-Modus berechnet nach ΔTᵣₑₗ = 100 - [T(ON)/T(OFF)^{∗}100]. ΔTᵣₑₗ gibt damit die prozentuale Transmissionsänderung bezogen auf T(OFF) an.

**Tabelle 11: Proben für die optische Charaktersierung.**

| **Beispiel** | **Methode** | **Gehalt¹** | **Schichtdicke** |
|---|---|---|---|
| **6** | Compoundieren & Spritzgießen | 20 Gew.-% | 2,0 mm |
| **7** | Compoundieren & Pressen | 20 Gew.-% | 4,0 mm |
| **8** | Gießverfahren | 15 Gew.-% | 2,9 mm |
| **9** | Gießverfahren | 15 Gew.-% | 4,6 mm |

| | | | |
|---|---|---|---|
| 1: Anteil der erfindungsgemäßen Polymerpartikel an der Gesamtmasse der Probe auf Basis der eingesetzten Gewichtsanteile. | | | |

**Tabelle 12: Ergebnisse der normal-hemisphärischen Transmissionsmessungen bei 25°C (OFF) und bei 85°C (ON).**

| **Beispiel** | **TviSₙₕ (OFF)** | **Tvisₙₕ (ON)** | Δ**Tvisₙₕ abs** | Δ**Tvisₙₕ rel** | **Tsolₙₕ (OFF)** | **Tsolₙₕ (ON)** | Δ**Tsolₙₕ abs** | Δ**Tsolₙₕ rel** |
|---|---|---|---|---|---|---|---|---|
| **6** | 82% | 56% | 26% | 32% | 79% | 59% | 20% | 25% |
| **7** | 82% | 39% | 43% | 52% | 74% | 40% | 34% | 46% |
| **8** | 89% | 60% | 29% | 33% | 85% | 64% | 21% | 25% |
| **9** | 85% | 42% | 43% | 51% | 81% | 49% | 32% | 40% |

Die Probenkörper der Beispiele 6 bis 9 verfügen im OFF-Modus über eine hohe Lichttransmission (Tvisₙₕ (OFF) = 82 bis 89%). Die solare Transmission ist nur geringfügig niedriger (Tsolₙₕ (OFF) = 74 bis 85%). Durch Temperaturerhöhung reduziert sich die sichtbare Transmission Tvisₙₕ zwischen 26 und 43%, die solare Transmission Tsolₙₕ zwischen 20 und 34%. Die relativen Änderungen bezogen auf die Transmission im OFF-Modus betragen zwischen 32 und 52% im sichtbaren und zwischen 25 und 46% im solaren Wellenlängenbereich.

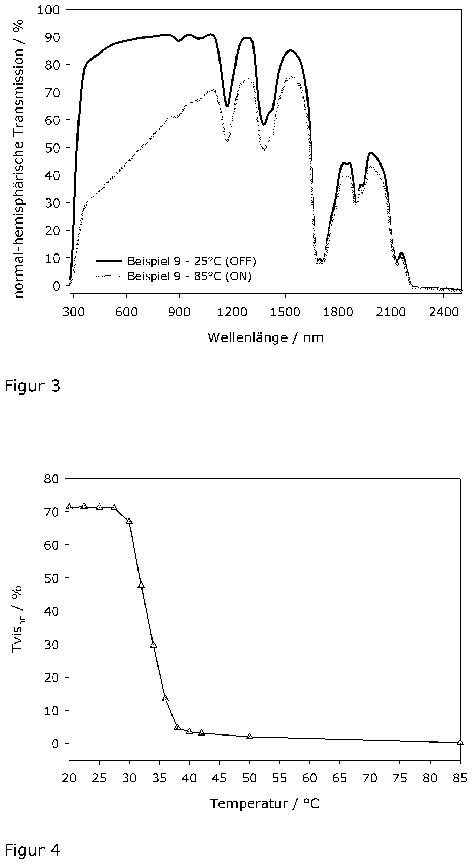

Figur 3 zeigt die zugehörigen Spektren der normal-hemisphärischen Transmission anhand von Beispiel 9.

Ergänzend zur den Messungen der normal-hemisphärischen Transmission wurde der gepresste PMMA-Formkörper aus Beispiel 7 durch temperaturabhängige Messungen der normal-normalen Transmission charakterisiert. Dabei wurde der Probenkörper in einem thermostatisierbaren Probenhalter direkt im Strahlengang des Spektrometers schrittweise von 20 auf 85°C erwärmt. Bei den Temperaturen 20, 22,5, 25, 27,5, 30, 32, 34, 36, 38, 40, 42, 50 und 85°C wurden Transmissionsspektren im Wellenlängenbereich 280 - 2500 nm aufgenommen. Die Temperierzeit betrug zwischen 15 und 60 min. In Figur 4 sind die aus den Transmissionsspektren berechneten Transmissionswerte der normal-normalen, sichtbaren Transmission (Tvisₙₙ) gegen die Temperatur aufgetragen. Im Temperaturbereich des OFF-Modus (20 bis 30°C) ist Tvisₙₙ nahezu konstant. Ab einer Probentemperatur von ca. 30°C setzt die thermotrope Schaltung ein. Im Temperaturbereich von 30 bis 40°C nimmt die Transmission dann signifikant um mehr als 75% ab. Oberhalb von 40°C (ON-Modus) verringert sich Tvisₙₙ nur noch geringfügig.

Dieses Beispiel zeigt, dass die größte Transmissionsabnahme im Bereich der Phasenübergangstemperatur Tₘ der Polymerphase A der erfindungsgemäßen Partikel zu beobachten ist. Die Eintrübung erfolgt in einem vergleichsweise engen Temperaturfenster parallel zur Probentemperatur. Die Schaltzeiten sind kurz. Beim Abkühlen kehrt die Probe in den ursprünglichen transparenten Zustand zurück. Das Aufklaren erfolgt dabei leicht verzögert bei geringfügig niedrigeren Temperaturen.

### Verwendete Abkürzungen

- AIBN: Azo-bis-(isobutyronitril)
- ALMA: Allylmethacrylat
- BA: n-Butylacrylat
- BPO: Dibenzoylperoxid
- BzMA: Benzylmethacrylat
- DCA: n-Docosanylacrylat
- EA: Ethylacrylat
- HDA: *n*-Hexadecylacrylat
- HEMA: 2-Hydroxyethylmethacrylat
- HPA: Hydroxypropylacrylat (Isomerengemisch)
- LPO: Dilauroylperoxid
- MMA: Methylmethacrylat
- NaHCO₃: Natriumhydrogencarbonat
- NaPDS: Natriumperoxodisulfat
- ODA: *n*-Octadecylacrylat
- SDS: Natriumdodecylsulfat

## Patentansprüche

1. Polymerpartikel mit einem mittleren Primärpartikeldurchmesser zwischen 50 nm und 10 µm bezogen auf das Gesamtgewicht enthaltend
A. 10 bis 100 Gew.-% einer Polymerphase A erhältlich durch radikalische Copolymerisation einer Öl-in-Wasser-Miniemulsion mit einer Monomermischung als Ölphase enthaltend
i) 30 bis 99,9 Gew.-% eines oder mehrerer einfach ethylenisch ungesättigter Monomere I mit wenigstens einer C₁₂-C₄₈-*n-*Alkylseitenkette,
ii) 0 bis 60 Gew.-% eines oder mehrerer einfach ethylenisch ungesättigter Monomere II mit wenigstens einer C₁-C₁₁-*n*-Alkyl- und/oder einer C₃-C₄₆-*i*-Alkylseitenkette,
iii) 0,1 bis 20 Gew.-% eines oder mehrerer Monomere III mit wenigstens zwei nicht konjugierten ethylenischen Doppelbindungen,
iv) 0 bis 69,9 Gew.-% eines oder mehrerer (hetero)aromatischer, einfach ethylenisch ungesättigter Monomere IV,
v) 0 bis 40 Gew.-% eines oder mehrerer sonstiger, einfach ethylenisch ungesättigter Monomere V,
und
B. 0 bis 90 Gew.-% einer Polymerphase B erhältlich durch anschließende radikalische Pfropfcopolymerisation in Gegenwart der nach Stufe A) erhaltenen Polymerphase A einer Monomermischung enthaltend
i) 0 bis 100 Gew.-% eines oder mehrerer Monomere VI aus der Gruppe der C₁-C₁₀-Alkyl(meth)acrylate,
ii) 0 bis 100 Gew.-% eines oder mehrerer (hetero)aromatischer, einfach ethylenisch ungesättigter Monomere VII,
iii) 0 bis 50 Gew.-% eines oder mehrerer sonstiger, einfach ethylenisch ungesättigter Monomere VIII,
wobei sich die Gewichtsprozente der in den jeweiligen Stufen eingesetzten Monomermischungen zu 100 Gew.-% addieren, wobei wenn eine Polymerphase B vorhanden ist, Polymerphase A einen inneren Kern bildet und Polymerphase B eine äußere Schale bildet.

2. Polymerpartikel nach Anspruch 1, **dadurch gekennzeichnet, dass** die Polymerpartikel einen Phasenübergang erster Ordnung im Temperaturbereich von -20 bis 150°C zeigen.

3. Polymerpartikel nach mindestens einem der Ansprüche 1 und 2, **dadurch gekennzeichnet, dass**
i. die Monomere I ausgewählt werden aus der Gruppe Ia) der Ester von α,β-ethylenisch ungesättigten C₃-C₄-Carbonsäuren und C₁₂-C₄₈-*n*-Alkanolen, Ib) der Mono- und Dialkylester von α,β-ethylenisch ungesättigten C₄-C₆-Dicarbonsäuren mit mindestens einer C₁₂-C₄₈-*n*-Alkylseitenkette als Esterrest und Ic) der Allyl- und Vinylester von C₁₃-C₄₉-*n-*Alkancarbonsäuren,
ii. die Monomere II ausgewählt werden aus der Gruppe IIa) der Ester von α,β-ethylenisch ungesättigten C₃-C₄-Carbonsäuren und C₁-C₁₁-*n-*Alkanolen oder C₃-C₄₆-*i*-Alkanolen, IIb) der Mono- und Diester von α,β-ethylenisch ungesättigten C₄-C₆-Dicarbonsäuren und C₁-C₁₁-*n*-Alkanolen und/oder C₃-C₄₈-*i*-Alkanolen und IIc) der Allyl- und Vinylester von C₂-C₁₂-*n*-Alkancarbonsäuren und C₄-C₄₉-*i*-Alkancarbonsäuren,
iii. der Anteil der Polymerphase B an der Partikelgesamtmasse 0 Gew.-% beträgt und die Monomere III ausgewählt werden aus der Gruppe IIIa) der (Meth)acrylsäureester von mehrwertigen Alkoholen, IIIb) die Vinyl- und Allylether von mehrwertigen Alkoholen und IIIc) der zwei- oder mehrfach allyl-, vinyl- oder (meth)acrylsubstituierten (hetero)cyclischen und (hetero)aromatischen Verbindungen,
iv. der Anteil der Polymerphase B an der Partikelgesamtmasse mehr als 0 Gew.-% beträgt und die Monomere III ausgewählt werden aus der Gruppe der Allyl-, Methallyl- und Crotylester α,β-ethylenisch ungesättigter Carbonsäuren und Dicarbonsäuren,
v. die Monomere IV ausgewählt werden aus der Gruppe IVa) der Vinyl(hetero)aromaten und IVb) der (hetero)aromatischen (Meth)acrylate,
vi. die Monomere V ausgewählt werden aus der Gruppe Va) der α,β-ethylenisch ungesättigten Mono- und Dicarbonsäuren, Vb) der α,β-ethylenisch ungesättigten Carbonsäureanhydride, Vc) der α,β-ethylenisch ungesättigten Carbonsäureamide und Vd) der Hydroxy-, Alkoxy-, Carboxy-, Amino-, Epoxy-, Sulfo-, Silyl- und Halogen-substituierten Alkyl(meth)acrylate sowie heterocyclischen (Meth)acrylate,
vii. die Monomere VII ausgewählt werden aus der Gruppe IVa) der Vinyl(hetero)aromaten und IVb) der (hetero)aromatischen (Meth)acrylate,
viii.die Monomere VIII ausgewählt werden aus der Gruppe Va) der α,β-ethylenisch ungesättigten Mono- und Dicarbonsäuren, Vb) der α,β-ethylenisch ungesättigten Carbonsäureanhydride, Vc) der α,β-ethylenisch ungesättigten Carbonsäureamide und Vd) der Hydroxy-, Alkoxy-, Carboxy-, Amino-, Epoxy-, Sulfo-, Silyl- und Halogen-substituierten Alkyl(meth)acrylate sowie heterocyclischen (Meth)acrylate,
ix. die Polymerphase B durch Copolymerisation von 80 bis 99,99 Gew.-% Methylmethacrylat und von 0,01 bis 20 Gew.-% eines C₁-C₈-Alkylacrylats aufgebaut wird,
x. der Gewichtsanteil der Polymerphase B an der Partikelgesamtmasse zwischen 5 und 90 Gew.-%, bevorzugt zwischen 10 und 50 Gew.-%, insbesondere zwischen 15 und 35 Gew.-% beträgt,
xi. die Polymerpartikel 0 bis 10 Gew.-% anorganische Partikel aus der Gruppe der Silikate oder Oxide der Elemente AI, Si, Zr, Hf, Ti, Zn, Pb sowie deren mögliche Mischoxide enthalten, und/oder
xii. die jeweilige Polymerphase 0 bis 2 Gew.-% eines Molekulargewichtsreglers ausgewählt aus der Gruppe der C₁-C₁₈-Alkanthiole enthält.

4. Verfahren zur Herstellung der Polymerpartikel nach mindestens einem der Ansprüche 1 bis 3, bei dem man
A. eine wässrige Phase A aus Wasser und Tensid vorlegt,
B. 10 bis 100 Gew.-% einer Monomerphase A enthaltend
i) 30 bis 99,9 Gew.-% eines oder mehrerer einfach ethylenisch ungesättigter Monomere I mit wenigstens einer C₁₂-C₄₈-*n-*Alkylseitenkette,
ii) 0 bis 60 Gew.-% eines oder mehrerer einfach ethylenisch ungesättigter Monomere II mit wenigstens einer C₁-C₁₁-*n*-Alkyl- und/oder einer C₃-C₄₈-*i*-Alkylseitenkette,
iii) 0,1 bis 20 Gew.-% eines oder mehrerer Monomere III mit wenigstens zwei nicht konjugierten ethylenischen Doppelbindungen,
iv) 0 bis 69,9 Gew.-% eines oder mehrerer (hetero)aromatischer, einfach ethylenisch ungesättigter Monomere IV,
v) 0 bis 40 Gew.-% eines oder mehrerer sonstiger, einfach ethylenisch ungesättigter Monomere V,
zugibt und zunächst unter Rühren zu einer o/w-Makroemulsion vordispergiert, anschließend zu einer o/w-Miniemulsion homogenisiert und schließlich bis zu einem Umsatz von wenigstens 90 Gew.-% bezogen auf die Gesamtmasse der Monomere I, II, III, IV und V polymerisiert,
C. 0 bis 90 Gew.-% einer Monomerphase B enthaltend
i) 0 bis 100 Gew.-% eines oder mehrerer Monomere VI aus der Gruppe der C₁-C₁₀-Alkyl(meth)acrylate,
ii) 0 bis 100 Gew.-% eines oder mehrerer (hetero)aromatischer, einfach ethylenisch ungesättigter Monomere VII,
iii) 0 bis 50 Gew.-% eines oder mehrerer sonstiger, einfach ethylenisch ungesättigter Monomere VIII,
zugibt, bis zu einem Umsatz von wenigstens 90 Gew.-% bezogen auf die Gesamtmasse der Monomere VI, VII und VIII polymerisiert und das resultierende Polymerisat aus der wässrigen Phase isoliert, wobei sich die angegebenen Gewichtsprozente der Monomerphasen A und B zu 100 Gew.-% addieren, **dadurch gekennzeichnet, dass** für den Homogenisierungsschritt zur Bildung der die Monomerphase A und die wässrige Phase A enthaltenden o/w-Miniemulsion Ultraschallreaktoren, Hochdruckhomogenisatoren, Rotor-Stator-Systeme, Systeme mit statischen Mischern oder Kombinationen davon verwendet werden.

5. Verfahren nach Anspruch 4, **dadurch gekennzeichnet, dass** die Monomerphase B unter solchen Bedingungen zugegeben wird, dass die Bildung neuer Partikel vermieden wird und sich die in dieser Polymerisationsstufe entstehende Polymerphase B als Schale um die in der ersten Polymerisationsstufe aus der Monomerphase A entstandenen Polymerphase A herum anlagert.

6. Verfahren nach mindestens einem der Ansprüche 4 und 5, **dadurch gekennzeichnet, dass**
i. die Monomerphase B als o/w-Makroemulsion nach Maßgabe ihres Verbrauchs zugegeben wird,
ii. zur Polymerisation der Monomerphase A eine oder mehrere öllösliche und/oder wasserlösliche radikalische Polymerisationsinitiatoren verwendet werden,
iii. zur Polymerisation der Monomerphase A 0,1 bis 5 Gew.-% radikalischer Polymerisationsinitiator bezogen auf die zu polymerisierende Monomermenge eingesetzt werden,
iv. zur Polymerisation der Monomerphase B eine oder mehrere wasserlösliche radikalische Polymerisationsinitiatoren verwendet werden,
v. zur Polymerisation der Monomerphase B 0,01 bis 1 Gew.-% radikalischer Polymerisationsinitiator bezogen auf die zu polymerisierende Monomermenge eingesetzt werden,
vi. die Polymerisationstemperatur für die jeweilige Polymerisationsstufe zwischen 20 und 100°C, vorzugsweise zwischen 50 und 95°C, insbesondere zwischen 60 und 90°C beträgt,
vii. anionische und/oder nichtionische Tenside verwendet werden,
viii.die Tensidmenge so gewählt wird, dass die kritische Mizellbildungskonzentration (cmc) des Tensids in der wässrigen Phase der die Monomerphase A enthaltenden o/w-Miniemulsion nicht überschritten wird,
ix. der pH-Wert der wässrigen Phase A durch Zusatz von Puffersubstanzen, wie beispielsweise Natriumhydrogencarbonat, für die radikalische Polymerisation vorteilhaft gestaltet wird,
x. die Monomerphase A und die wässrige Phase A vor der Vereinigung zu einer o/w-Makroemulsion auf eine Temperatur zwischen 25 und 100°C, vorzugsweise zwischen 30 und 60°C temperiert werden, und/oder
xi. der Feststoffgehalt der nach Abschluss der Polymerisation erhaltenen wässrigen Dispersion 10 bis 70 Gew.-%, vorzugsweise 20 bis 60 Gew.-%, insbesondere 30 bis 50 Gew.-% beträgt.

7. Verfahren nach mindestens einem der Ansprüche 4 bis 6, **dadurch gekennzeichnet, dass**
i. die Polymerpartikel nach mindestens einem der Ansprüche 1 bis 3 nach Abschluss der Polymerisation durch eine Abfolge aus Fällung bzw. Koagulation, Filtration, Waschen und Trocknen aus der wässrigen Phase gewonnen werden,
ii. die Polymerpartikel nach mindestens einem der Ansprüche 1 bis 3 nach Abschluss der Polymerisation durch Zugabe von Salzen, die mehrwertige Kationen wie beispielsweise Ca²⁺, Mg²⁺ oder Al³⁺ enthalten, gefällt bzw. koaguliert werden,
iii. die Polymerpartikel nach mindestens einem der Ansprüche 1 bis 3 nach Abschluss der Polymerisation durch Einfrieren bei Temperaturen zwischen 0 bis -40°C, vorzugsweise -10 bis -30°C, koaguliert werden,
iv. die Polymerpartikel nach mindestens einem der Ansprüche 1 bis 3 nach Abschluss der Polymerisation durch Koagulation, Entwässerung und Entgasung mit einem Schneckenextruder aus der wässrigen Phase gewonnen werden, und/oder
v. die Polymerpartikel nach mindestens einem der Ansprüche 1 bis 3 nach Abschluss der Polymerisation in nur einem Verfahrensschritt mit einem Schneckenextruder koaguliert, entwässert, entgast und mit einer Formmasse als Matrixkunststoff abgemischt werden.

8. Kunststoff, **dadurch gekennzeichnet, dass** er bezogen auf sein Gesamtgewicht
a. 1 bis 80 Gew.-% Polymerpartikel nach mindestens einem der Ansprüche 1 bis 3,
b. 20 bis 99 Gew.-% einer Matrix, bestehend aus
i. 50 bis 100 Gew.-% wenigstens eines Matrixkunststoffs und
ii. 0 bis 50 Gew.-% weitere Zusatzstoffe, wie beispielsweise Gleitmittel, Antiblockmittel, Trennmittel, Dispergiermittel, Antistatika, Flammschutzmittel, Farbmittel, Schlagzähmodifizierungsmittel, Weichmacher, Haftvermittler, Füllstoffe, Verstärkungsmittel, Treibmittel und Stabilisatoren, wie Antioxidantien, Lichtschutzmittel, Wärmeschutzmittel,
enthält.

9. Kunststoff nach Anspruch 8, **dadurch gekennzeichnet, dass** er geformt zu einer Kunststoffplatte oder -folie mit einer Schichtdicke von 2 mm im Temperaturbereich von -20 bis 150°C eine Änderung des totalen Lichttransmissionsgrads nach DIN EN 410 von mindestens 5 % bezogen auf den maximalen totalen Lichttransmissionsgrad der Kunststoffplatte oder -folie zeigt.

10. Kunststoff nach mindestens einem der Ansprüche 8 und 9, **dadurch gekennzeichnet, dass** als Matrixkunststoff eine thermoplastische Formmasse aus der Gruppe der Polyethylen Standard-Homo- und Copolymere (z.B. PE-LD, PE-HD), der Ethylen-Copolymere (PE-ULD, PE-VLD, EVA, EVOH, EBA, EEAK, EMA, EAMA, COC, EIM), der Polypropylene (PP), der Styrolpolymere (PS, ABS, SAN), der Polyvinylchloride (PVC), der Polyvinylbutyrale (PVB), der thermoplastischen Polyurethane (TPU), der Polymethacrylat Homo- und Copolymere bzw. schlagzähe Modifizierungen (PMMA, AMMA, MBS, MABS, PMMI, PMMA-HI), der Polyamide (PA), der Polycarbonate (PC) und PC-Blends, der Polyester der Terephthalsäure (PET, PBT) und Blends, der Polyarylsulfone (PSU), der Polyethersulfone (PES) und der Cellulose-Derivate (CA, CAB, CAP) verwendet wird, insbesondere
dass als Matrixkunststoff eine thermoplastische Formmasse aus der Gruppe: Polymethylmethacrylat (PMMA), schlagzähe Varianten von PMMA (PMMA-HI), Methylmethacrylat-Copolymerisate (AMMA), Polymethacrylmethylimid (PMMI), transparente Polyamide (PA) auf Basis aromatischer Dicarbonsäuren oder verzweigter aliphatischer bzw. acyclischer Diamine, transparente Polyamide (PA) auf Basis von Dodecandisäure und einem cycloaliphatischen Diamin, Polycarbonat (PC) auf Basis von Bisphenol A, Polyethylenterephthalat (PET), Polystyrol (PS), Polyvinylbutyral (PVB) und thermoplastisches Polyurethan (TPU) verwendet wird.

11. Kunststoff nach mindestens einem der Ansprüche 8 und 9, **dadurch gekennzeichnet, dass** als Vorstufe für den Matrixkunststoff härtbare Formmassen und härtbare Gieß- bzw. Laminierharze, wie transparente oder transluzente Formaldehyd-Harze, ungesättigte Polyester-Harze, Epoxid-Harze, Silikon-Harze, Diallylphthalat-Harze und Diallyldiglycolcarbonat, verwendet werden, und/oder
dass als Vorstufe für den Matrixkunststoff thermisch härtbare Präpolymer-Gemische aus Polymethylmethacrylat (PMMA), Methylmethacrylat (MMA), mindestens einem radikalischen Polymerisationsinitiator und ggf. (vernetzender) Comonomere verwendet werden.

12. Verfahren zur Herstellung des Kunststoffs nach mindestens einem der Ansprüche 8 bis 10, **dadurch gekennzeichnet, dass** die Polymerpartikel nach mindestens einem der Ansprüche 1 bis 3 mit der Matrix durch Compoundieren, insbesondere in einem Extruder oder Kneter, gemischt werden.

13. Verfahren nach Anspruch 12, **dadurch gekennzeichnet, dass** der Kunststoff nach mindestens einem der Ansprüche 8 bis 10 anschließend durch geeignete Verfahren, wie beispielsweise Extrusion, Kalandrieren, Extrusions-Blasformen, Spritzgießen, Spritzprägen, Spritzgieß-Blasformen und Pressen, in Formkörper wie Massivplatten, Stegplatten, Wellplatten, Folien, Stäbe, Rohre oder andere Formkörper geformt wird, und/oder
anschließend mit weiteren Werkstoffen, wie Glas, Kunststoff, Holz, Metall und dergleichen, beispielsweise durch Coextrusion, Mehrkomponenten-Spritzgießen, Verkleben, Laminieren, Gießen, Spritzen, Rakeln, Fluten und dergleichen, verbunden wird.

14. Verfahren zur Herstellung des Kunststoffs nach mindestens einem der Ansprüche 8, 9 und 11, **dadurch gekennzeichnet, dass** die Polymerpartikel nach mindestens einem der Ansprüche 1 bis 3 mit der härtbaren Vorstufe des Matrixkunststoffs gemischt und zu Kunststoffteilen, wie beispielsweise Platten, Folien und dergleichen, oder zu Verbundmaterialien, wie beispielsweise Verbundgläser, gehärtet wird.

15. Verwendung des Kunststoffs nach mindestens einem der Ansprüche 8 bis 11 zur Herstellung von Formkörpern und Kunststoffteilen, wie Massivplatten, Stegplatten, Wellplatten, Folien, Stäbe, Rohre und dergleichen, insbesondere für Verglasungen von Gebäuden, Fahrzeugen, Wintergärten, Treib- und Gewächshäusern; für Glasfassaden, Glasfassadenelemente und Vorhangfassaden; für Sonnenschutzglas und lichtlenkendes Sonnenschutzglas; für Isolierglas, Wärmeschutzglas und Isolierplatten; für Verbundglas, Sicherheits- und Schallschutzverbundglas; für Carports, Balkonverglasungen, Terrassenüberdachungen, Glashäuser, Schwimmbadhallenverglasungen und -dächer; für Dach-, Überkopf- und Oberlichtverglasungen; für Industrieverglasungen; für Lichtbauelemente, Lichtkuppeln, Lichtbänder und Tonnengewölbe; für Profilbauglas, Hohlkammerscheiben und Paneele; für die transparente Wärmedämmung; als Abdeckungen für Solarkollektoren und Photovoltaik-Module; für Sonnenschutzfolien und -lacke; für Agrar- und Gewächshausfolien; als Laminierfolie für beispielsweise Verbundglas; für Innenraumverglasungen, Trennwände, Raumteiler, Duschkabinen, Glastüren und Glasschiebetüren; für Dekorglas; für Leuchtenabdeckungen, Lampenschirme, Reflektoren und Lichtleiter; für optische Linsen und Brillengläser bzw. deren Beschichtungen; für die Lichtwerbung und Leuchtreklame; für Verkehrs- und Hinweisschilder und für Verpackungen.

## Claims

1. Polymer particles with an average primary particle diameter of from 50 nm to 10 µm, comprising, based on their total weight:
A) from 10 to 100% by weight of a polymer phase A, obtainable by free-radical copolymerization of an oil-in-water miniemulsion with a monomer mixture as the oil phase, comprising
i) 30 to 99.9% by weight of one or more mono-ethylenically unsaturated monomers I with at least one C₁₂-C₄₈ n-alkyl side chain;
ii) 0 to 60% by weight of one or more mono-ethylenically unsaturated monomers II with at least one C₁-C₁₁ n-alkyl and/or one C₃-C₄₈ i-alkyl side chain;
iii) 0.1 to 20% by weight of one or more monomers III with at least two non-conjugated ethylenic double bonds;
iv) 0 to 69.9% by weight of one or more (hetero)aromatic, mono-ethylenically unsaturated monomers IV;
v) 0 to 40% by weight of one or more other mono-ethylenically unsaturated monomers V;
and
B) from 0 to 90% by weight of a polymer phase B, obtainable by the subsequent free-radical graft copolymerization, in the presence of the polymer phase A obtained after step A), of a monomer mixture comprising
i) 0 to 100% by weight of one or more monomers VI from the group of C₁-C₁₀ alkyl (meth)acrylates;
ii) 0 to 100% by weight of one or more (hetero)aromatic mono-ethylenically unsaturated monomers VII;
iii) 0 to 50% by weight of one or more other mono-ethylenically unsaturated monomers VIII;
wherein the weight percentages of the monomer mixtures employed in the respective steps add up to 100% by weight, wherein, if a polymer phase B is present, then polymer phase A forms an inner core and polymer phase B forms an outer shell.

2. The polymer particles according to claim 1, **characterized in that** said polymer particles exhibit a first order phase transition in a temperature range of from -20 to 150 °C.

3. The polymer particles according to at least one of claims 1 and 2, **characterized in that**
i. the monomers I are selected from the group Ia) of esters of α,β-ethylenically unsaturated C₃-C₄ carboxylic acids and C₁₂-C₄₈ n-alkanols; Ib) of the mono- and dialkyl esters of α,β-ethylenically unsaturated C₄-C₆ dicarboxylic acids with at least one C₁₂-C₄₈ n-alkyl side chain as an ester radical; and Ic) of the allyl and vinyl esters of C₁₃-C₄₉ n-alkanoic acids;
ii. said monomers II are selected from the group IIa) of esters of α,β-ethylenically unsaturated C₃-C₄ carboxylic acids and C₁-C₁₁ n-alkanols or C₃-C₄₈ i-alkanols, IIb) of mono- and diesters of α,β-ethylenically unsaturated C₄-C₆ dicarboxylic acids, and C₁-C₁₁ n-alkanols and/or C₃-C₄₈ i-alkanols, and IIc) the allyl and vinyl esters of C₂-C₁₂ n-alkanoic acids, and C₄-C₄₉ i-alkanoic acids;
iii. the proportion of polymer phase B in the total particle weight is 0% by weight, and the monomers III are selected from the group of IIIa) the (meth)acrylic acid esters of polyhydric alcohols, IIIb) the vinyl and allyl ethers of polyhydric alcohols, and IIIc) (hetero)cyclic and (hetero)aromatic compounds disubstituted or polysubstituted with allyl, vinyl or (meth)acrylic groups;
iv. the proportion of polymer phase B in the total particle weight is more than 0% by weight, and the monomers III are selected from the group of allyl, methallyl and crotyl esters of α,β-ethylenically unsaturated carboxylic acids and dicarboxylic acids;
v. said monomers IV are selected from the group IVa) of vinyl(hetero)aromatics and IVb) of (hetero)aromatic (meth)acrylates;
vi. said monomers V are selected from the group Va) of α,β-ethylenically unsaturated mono- and dicarboxylic acids, Vb) of α,β-ethylenically unsaturated carboxylic anhydrides, Vc) of α,β-ethylenically unsaturated carboxylic acid amides, and Vd) of hydroxy-, alkoxy-, carboxy-, amino-, epoxy-, sulfo-, silyl- and halo-substituted alkyl (meth)acrylates, and heterocyclic (meth)acrylates;
vii. said monomers VII are selected from the group IVa) of vinyl-(hetero)aromatics and IVb) of (hetero)aromatic (meth)acrylates;
viii. said monomers VIII are selected from the group Va) of α,β-ethylenically unsaturated mono- and dicarboxylic acids, Vb) of α,β-ethylenically unsaturated carboxylic anhydrides, Vc) of α,β-ethylenically unsaturated carboxylic acid amides, and Vd) of hydroxy-, alkoxy-, carboxy-, amino-, epoxy-, sulfo-, silyl- and halo-substituted alkyl (meth)acrylates, and heterocyclic (meth)acrylates;
ix. said polymer phase B is formed by the copolymerization of from 80 to 99.99% by weight of methyl methacrylate, and from 0.01 to 20% by weight of a C₁-C₈ alkyl acrylate;
x. the weight proportion of polymer phase B in the total weight of the particles according to the invention is from 5 to 90% by weight, preferably from 10 to 50% by weight, especially from 15 to 35% by weight;
xi. said polymer particles contain from 0 to 10% by weight of inorganic particles selected from the group of silicates and oxides of the elements Al, Si, Zr, Hf, Ti, Zn, Pb, and possible mixed oxides thereof; and/or
xii. the respective polymer phase contains from 0 to 2% by weight of a molecular weight regulator selected from the group of C₁-C₁₈ alkanethiols.

4. A process for preparing the polymer particles according to at least one of claims 1 to 3, in which
A. an aqueous phase A of water and surfactant is provided;
B. from 10 to 100% by weight of a monomer phase A, comprising
i) 30 to 99.9% by weight of one or more mono-ethylenically unsaturated monomers I with at least one C₁₂-C₄₈ n-alkyl side chain;
ii) 0 to 60% by weight of one or more mono-ethylenically unsaturated monomers II with at least one C₁-C₁₁ n-alkyl and/or one C₃-C₄₈ i-alkyl side chain;
iii) 0.1 to 20% by weight of one or more monomers III with at least two non-conjugated ethylenic double bonds;
iv) 0 to 69.9% by weight of one or more (hetero)aromatic, mono-ethylenically unsaturated monomers IV;
v) 0 to 40% by weight of one or more other mono-ethylenically unsaturated monomers V;
is added, and the mixture is at first predispersed with stirring to form an o/w macroemulsion, then homogenized to form an o/w miniemulsion, and finally polymerized up to a conversion of at least 90% by weight, based on the total weight of monomers I, II, III, IV and V;
C) from 0 to 90% by weight of a monomer phase B, comprising
i) 0 to 100% by weight of one or more monomers VI from the group of C₁-C₁₀ alkyl (meth)acrylates;
ii) 0 to 100% by weight of one or more (hetero)aromatic mono-ethylenically unsaturated monomers VII;
iii) 0 to 50% by weight of one or more other mono-ethylenically unsaturated monomers VIII;
is added, the mixture is polymerized up to a conversion of at least 90% by weight, based on the total weight of monomers VI, VII and VIII; and the resulting polymer is isolated from the aqueous phase, wherein the stated weight percentages of the monomer phases A and B add up to 100% by weight;
**characterized in that** ultrasound reactors, high-pressure homogenizers, rotor-stator systems, systems with static mixers, or combinations thereof are used for the homogenization step for forming the o/w miniemulsion containing the monomer phase A and the aqueous phase A.

5. The process according to claim 4, **characterized in that** the monomer phase B is added under such conditions that the formation of new particles is avoided, and the polymer phase B, which forms in this polymerization stage, is deposited as a shell around polymer phase A formed from the monomer phase A in the first polymerization stage.

6. The process according to at least one of claims 4 and 5, **characterized in that**
i. said monomer phase B is added as an o/w macroemulsion at the same rate as it is consumed;
ii. one or more oil-soluble and/or water-soluble free-radical polymerization initiators are used for polymerizing monomer phase A;
iii. from 0.1 to 5% by weight of free-radical polymerization initiator is employed for polymerizing monomer phase A, based on the amount of monomers to be polymerized;
iv. one or more water-soluble free-radical polymerization initiators are used for polymerizing monomer phase B;
v. from 0.01 to 1% by weight of free-radical polymerization initiator is employed for polymerizing monomer phase B, based on the amount of monomers to be polymerized;
vi. the polymerization temperature for the respective polymerization stage is from 20 to 100 °C, preferably from 50 to 95 °C, especially from 60 to 90 °C;
vii. anionic and/or non-ionic surfactants are used;
viii. the amount of surfactant is chosen so that the critical micelle concentration (cmc) of the surfactant in the aqueous phase of the o/w miniemulsion containing said monomer phase A is not exceeded;
ix. a pH of the aqueous phase A that is advantageous for free-radical polymerization is provided by adding buffer substances, such as sodium hydrogencarbonate;
x. the monomer phase A and the aqueous phase A are preheated to a temperature of from 25 to 100 °C, preferably from 30 to 60 °C, before being combined to an o/w macroemulsion; and/or
xi. the solids content of the aqueous dispersion obtained after completion of the polymerization is from 10 to 70% by weight, preferably from 20 to 60% by weight, especially from 30 to 50% by weight.

7. The process according to at least one of claims 4 to 6, **characterized in that**
i. the polymer particles according to at least one of claims 1 to 3 are recovered from the aqueous phase by a sequence of precipitation/coagulation, filtration, washing and drying after the polymerization is complete;
ii. the polymer particles according to at least one of claims 1 to 3 are precipitated or coagulated by the addition of salts containing polyvalent cations, such as Ca²⁺, Mg²⁺ or Al³⁺, after the polymerization is complete;
iii. the polymer particles according to at least one of claims 1 to 3 are coagulated by freezing at temperatures of from 0 to -40 °C, preferably from -10 to -30 °C, after the polymerization is complete;
iv. the polymer particles according to at least one of claims 1 to 3 are recovered from the aqueous phase by coagulation, dehydration and degassing using a screw extruder after the polymerization is complete;
v. after the polymerization is complete, the polymer particles according to at least one of claims 1 to 3 are coagulated, dehydrated and degassed using a screw extruder and mixed with a molding composition as a matrix plastic in a single operation.

8. A plastic material, **characterized by** comprising, based on its total weight:
a. from 1 to 80% by weight of polymer particles according to at least one of claims 1 to 3;
b. from 20 to 99% by weight of a matrix, consisting of
i. from 50 to 100% by weight of at least one matrix plastic; and
ii. from 0 to 50% by weight of other additives, such as glidants, antiblocking agents, mold-release agents, dispersants, antistatic agents, flame retardants, colorants, impact modifiers, plasticizers, adhesion promoters, fillers, enhancers, blowing agents and stabilizers, such as antioxidants, light stabilizers, thermal stabilizers.

9. The plastic material according to claim 8, **characterized by** exhibiting a change of the total light transmittance according to DIN EN 410 of at least 5%, based on the maximum total light transmittance of the plastic plate or film, within a temperature range of from -20 to 150 °C when formed into a plastic plate or film with a layer thickness of 2 mm.

10. The plastic material according to at least one of claims 8 and 9, **characterized in that** a thermoplastic molding composition selected from the group of polyethylene standard homo- and copolymers (e.g., PE-LD, PE-HD), ethylene copolymers (PE-ULD, PE-VLD, EVA, EVOH, EBA, EEAK, EMA, EAMA, COC, EIM), polypropylenes (PP), styrene polymers (PS, ABS, SAN), polyvinyl chlorides (PVC), polyvinyl butyrals (PVB), thermoplastic polyurethanes (TPU), polymethacrylate homo- and copolymers, or high impact resistance modifications (PMMA, AMMA, MBS, MABS, PMMI, PMMA-HI), polyamides (PA), polycarbonates (PC), and PC blends, polyesters of terephthalic acid (PET, PBT) and blends, polyarylsulfones (PSU), polyethersulfones (PES), and cellulose derivatives (CA, CAB, CAP) is used as a matrix plastic, in particular,
a thermoplastic molding composition selected from the group of poly(methyl methacrylate) (PMMA), high impact resistant variants of PMMA (PMMA-HI), methyl methacrylate copolymers (AMMA), polymethacrylmethylimide (PMMI), transparent polyamides (PA) based on aromatic dicarboxylic acids or branched aliphatic or acyclic diamines, transparent polyamides (PA) based on dodecanedioic acid and a cycloaliphatic diamine, polycarbonate (PC) based on bisphenol A, polyethylene terephthalate (PET), polystyrene (PS), polyvinyl butyral (PVB), and thermoplastic polyurethane (TPU) is used as a matrix plastic.

11. The plastic material according to at least one of claims 8 and 9, **characterized in that** curable molding compositions and curable casting and laminating resins, such as transparent or translucent formaldehyde resins, unsaturated polyester resins, epoxide resins, silicone resins, diallyl phthalate resins, and diallyl diglycol carbonate, are used as a precursor of the matrix plastic; and/or
thermally curable prepolymer mixtures of poly(methyl methacrylate) (PMMA), methyl methacrylate (MMA), at least one free-radical polymerization initiator and optionally (cross-linking) comonomers are used as a precursor of the matrix plastic.

12. A process for preparing the plastic material according to at least one of claims 8 to 10, **characterized in that** the polymer particles according to at least one of claims 1 to 3 are mixed with the matrix by compounding, especially in an extruder or kneader.

13. The process according to claim 12, **characterized in that** said plastic material according to at least one of claims 8 to 10 is subsequently formed by suitable methods, such as extrusion, calendering, extrusion blow molding, injection molding, injection-compression molding, injection blow molding, and compression molding, into molded parts, such as solid plates, multi-skin sheets, corrugated sheets, films, rods, tubes or other molded parts; and/or
is subsequently bonded with other materials, such as glass, plastic, wood, metal and the like, for example, by coextrusion, multicomponent injection molding, adhesive bonding, laminating, casting, spraying, knife coating, flow coating, and the like.

14. A process for preparing the plastic material according to at least one of claims 8, 9 and 11, **characterized in that** the polymer particles according to at least one of claims 1 to 3 are mixed with the curable precursor of the matrix plastic, and the mixture is cured to plastic parts, such as plates, films and the like, or to composite materials, such as laminated glasses.

15. Use of the plastic material according to at least one of claims 8 to 11 for the preparation of molded parts and plastic parts, such as solid plates, multi-skin sheets, corrugated sheets, films, rods, tubes, and the like, especially for glazings of buildings, vehicles, winter gardens, greenhouses; for glass facades, glass facade elements and curtain walls; for solar glass and light-directing solar glass; for insulating glass, heat-protection glass, and insulating plates; for laminated glass, safety glass, and laminated sound insulating glass; for carports, balcony glazing, terrace roofing, glass houses, indoor swimming pool glazings and roofings; for roof, overhead and fanlight glazing; for industrial glazing; for transparent construction elements, skylight domes, continuous rooflights and barrel vaults; for profiled glass, hollow chamber plates, and panels; for transparent heat insulation; as covers for solar collectors and photovoltaic modules; for sun protection films and lacquers; for agricultural and greenhouse films; as a laminating film for, for example, laminated glass; for indoor glazing, partition walls, room dividers, shower cabinets, glass doors and sliding glass doors; for decorative glass; for luminaire covers, lampshades, reflectors and optical waveguides; for optical lenses and eyeglass lenses or their coatings; for luminous advertising and neon signs; for traffic signs and sign boards, and for packaging.

## Revendications

1. Particules polymères dotées d'un diamètre moyen de particules primaires entre 50 nm et 10 µm contenant par rapport à la masse totale
A. 10 à 100 % (m/m) d'une phase polymère A pouvant être obtenue par copolymérisation radicalaire d'une miniémulsion huile dans eau avec un mélange de monomères en tant que phase huileuse contenant
i) 30 à 99,9 % (m/m) d'un ou plusieurs monomères I à insaturation mono-éthylénique dotés d'au moins une chaîne latérale n-alkyle en C₁₂ à C₄₈,
ii) 0 à 60 % (m/m) d'un ou plusieurs monomères II à insaturation mono-éthylénique dotés d'au moins une chaîne latérale n-alkyle en C₁ à C₁₁ et/ou une chaîne latérale i-alkyle en C₃ à C₄₈,
iii) 0,1 à 20 % (m/m) d'un ou plusieurs monomères III dotés d'au moins deux doubles liaisons éthyléniques non-conjuguées,
iv) 0 à 69,9 % (m/m) d'un ou plusieurs monomères IV (hétéro)aromatiques à insaturation mono-éthylénique,
v) 0 à 40 % (m/m) d'un ou plusieurs autres monomères V à insaturation mono-éthylénique,
et
B. 0 à 90 % (m/m) d'une phase polymère B pouvant être obtenue ensuite par copolymérisation radicalaire par greffage, en présence de la phase polymère A obtenue après le stade A), d'un mélange de monomères contenant
i) 0 à 100 % (m/m) d'un ou plusieurs monomères VI du groupe des (méth) acrylates d'alkyle en C₁ à C₁₀,
ii) 0 à 100 % (m/m) d'un ou plusieurs monomères VII (hétéro)aromatiques à insaturation mono-éthylénique,
iii) 0 à 50 % (m/m) d'un ou plusieurs autres monomères VIII à insaturation mono-éthylénique,
dans lesquelles la somme des pourcentages massiques des mélanges de monomères utilisés dans les stades respectifs est égale à 100 %, dans lesquelles lorsqu'une phase polymère B est prévue, la phase polymère A forme un noyau interne et la phase polymère B forme une coque externe.

2. Particules polymères selon la revendication 1, **caractérisées en ce que** les particules polymères présentent une transition de phase du premier ordre dans une plage de température de -20 à 150 °C.

3. Particules polymères selon au moins l'une des revendications 1 et 2, **caractérisées en ce que**
i. les monomères I sont sélectionnés parmi le groupe la) des esters d'acides carboxyliques en C₃ à C₄ à insaturation éthylénique α,β et de n-alcanols en C₁₂ à C₄₈, Ib) des esters de mono- et dialkyles d'acides dicarboxyliques C4-C6 à insaturation éthylénique α,β avec au moins une chaîne latérale *n*-alkyle en C₁₂ à C₄₈ en tant que résidu ester et Ic) des esters d'allyle et de vinyle d'acides n-alcanecarboxyliques en C₁₃ à C₄₉,
ii. les monomères II sont sélectionnés parmi le groupe IIa) des esters d'acides carboxyliques en C₃ à C₄ à insaturation éthylénique α,β et de *n*-alcanols en C₁ à C₁₁ ou de i-alcanols en C₃ à C₄₈, IIb) des esters de mono- et dialkyles d'acides dicarboxyliques en C₄ à C₆ à insaturation éthylénique α,β et de *n*-alcanols en C₁ à C₁₁ ou de *i*-alcanols en C₃ à C₄₈ et IIc) des esters d'allyle et de vinyle d'acides *n*-alcanecarboxyliques en C₂ à C₁₂ et *i*-alcanecarboxyliques en C₄ à C₄₉,
iii. la fraction de la phase polymère B s'élève à 0 % (m/m) de la masse totale des particules et les monomères III sont sélectionnés parmi le groupe IIIa) des esters (méth)acryliques d'alcools plurivalents, IIIb) des vinyl et allyl éthers d'alcools plurivalents et IIIc) des composés (hétéro)cycliques et (hétéro)aromatiques avec deux ou plusieurs substituants allyle, vinyle ou (méth)acryle,
iv. la fraction de la phase polymère B s'élève à plus de 0 % (m/m) de la masse totale des particules et les monomères III sont sélectionnés parmi le groupe des esters d'allyle, de méthallyle et de crotyle d'acides carboxyliques et dicarboxyliques à insaturation éthylénique α,β,
v. les monomères IV sont sélectionnés parmi le groupe IVa) des vinyl(hétéro)aromatiques et IVb) des (méth)acrylates (hétéro)aromatiques,
vi. les monomères V sont sélectionnés parmi le groupe Va) des acides carboxyliques et dicarboxyliques à insaturation éthylénique α,β, Vb) des anhydrides carboxyliques à insaturation éthylénique α,β, Vc) des amides carboxyliques à insaturation éthylénique α,β, Vd) des (méth)acrylates d'alkyle avec des substituants hydroxy, alcoxy, carboxy, amino, époxy, sulfo, silyle et halogène ainsi que des (méth)acrylates hétérocycliques,
vii. les monomères VII sont sélectionnés parmi le groupe IVa) des vinyl(hétéro)aromatiques et IVb) des (méth)acrylates (hétéro)aromatiques,
viii. les monomères VIII sont sélectionnés parmi le groupe Va) des acides carboxyliques et dicarboxyliques à insaturation éthylénique α,β, Vb) des anhydrides carboxyliques à insaturation éthylénique α,β, Vc) des amides carboxyliques à insaturation éthylénique α,β, Vd) des (méth)acrylates d'alkyle avec des substituants hydroxy, alcoxy, carboxy, amino, époxy, sulfo, silyl et halogène ainsi que des (méth)acrylates hétérocycliques,
ix. la phase polymère B est constituée par copolymérisation de 80 à 99,99 % (m/m) de méthacrylate de méthyle et de 0,01 à 20 % (m/m) d'un acrylate d'alkyle en C₁ à C₈,
x. la fraction massique de la phase polymère B dans la masse totale des particules vaut entre 5 et 90 % (m/m), de préférence entre 10 et 50 % (m/m), en particulier entre 15 et 35 % (m/m),
xi. les particules polymères contiennent 0 à 10 % (m/m) de particules inorganiques issues du groupe des silicates ou des oxydes des éléments Al, Si, Zr, Hf, Ti, Zn, Pb ainsi que de leurs oxydes mixtes possibles, et/ou
xii. la phase polymère respective contient 0 à 2 % (m/m) d'un régulateur de masse moléculaire sélectionné parmi le groupe des alcanethiols en C₁ à C₁₈.

4. Procédé de fabrication de particules polymères selon au moins l'une des revendications 1 à 3, où
A. on produit une phase A aqueuse à partir d'eau et de tensioactif,
B. on ajoute 10 à 100 % (m/m) d'une phase monomère A contenant
i) 30 à 99,9 % (m/m) d'un ou plusieurs monomères I à insaturation mono-éthylénique dotés d'au moins une chaîne latérale n-alkyle en C₁₂ à C₄₈,
ii) 0 à 60 % (m/m) d'un ou plusieurs monomères II à insaturation mono-éthylénique dotés d'au moins une chaîne latérale n-alkyle en C₁ à C₁₁ et/ou une chaîne latérale i-alkyle en C₃ à C₄₈,
iii) 0,1 à 20 % (m/m) d'un ou plusieurs monomères III dotés d'au moins deux doubles liaisons éthyléniques non-conjuguées,
iv) 0 à 69,9 % (m/m) d'un ou plusieurs monomères IV (hétéro)aromatiques à insaturation mono-éthylénique,
v) 0 à 40 % (m/m) d'un ou plusieurs autres monomères V à insaturation mono-éthylénique,
et on pré-disperse ensuite par agitation en une macroémulsion H/E, puis on homogénéise en une miniémulsion H/E et enfin on polymérise jusqu'à un taux de conversion d'au moins 90 % (m/m) par rapport à la masse totale des monomères I, II, III, IV et V,
C. on ajoute 0 à 90 % (m/m) d'une phase monomère B contenant
i) 0 à 100 % (m/m) d'un ou plusieurs monomères VI du groupe des (méth)acrylates d'alkyle en C₁ à C₁₀,
ii) 0 à 100 % (m/m) d'un ou plusieurs monomères VII (hétéro)aromatiques à insaturation mono-éthylénique,
iii) 0 à 50 % (m/m) d'un ou plusieurs autres monomères VIII à insaturation mono-éthylénique,
on polymérise jusqu'à un taux de conversion d'au moins 90 % (m/m) par rapport à la masse totale des monomères VI, VII et VIII et on isole le polymérisat résultant de la phase aqueuse, dans lequel la somme des pourcentages massiques donnés des phases monomères A et B vaut 100 %, **caractérisé en ce que** des réacteurs à ultrasons, des homogénéisateurs à haute pression, des systèmes rotor-stator, des systèmes à mélangeurs statiques ou des combinaisons de ceux-ci sont utilisés pour l'étape d'homogénéisation afin de former la miniémulsion H/E contenant la phase monomère A et la phase aqueuse A.

5. Procédé selon la revendication 4, **caractérisé en ce que** la phase monomère B est ajouté dans des conditions telles que la formation de nouvelles particules est prévenue et la phase polymère B résultant dans ce stade de polymérisation se dépose comme coque autour de la phase polymère A obtenue à partir de la phase monomère A dans le premier stade de polymérisation.

6. Procédé selon au moins l'une des revendications 4 et 5, **caractérisé en ce que**
i. la phase monomère B est ajoutée comme macroémulsion en fonction de sa consommation,
ii. un ou plusieurs initiateurs radicalaires de polymérisation solubles dans l'huile et/ou dans l'eau sont employés pour la polymérisation de la phase monomère A,
iii. par rapport à la quantité de monomère à polymériser, 0,1 à 5 % (m/m) d'initiateur radicalaire de polymérisation sont utilisés pour la polymérisation de la phase monomère A,
iv. un ou plusieurs initiateurs radicalaires de polymérisation solubles dans l'eau sont employés pour la polymérisation de la phase monomère B,
v. par rapport à la quantité de monomère à polymériser, 0,01 à 1 % (m/m) d'initiateur radicalaire de polymérisation est utilisé pour la polymérisation de la phase monomère B,
vi. la température de polymérisation pour le stade de polymérisation respectif vaut entre 20 et 100 °C, de préférence entre 50 et 95 °C, en particulier entre 60 et 90 °C,
vii. des tensioactifs anioniques et/ou non-ioniques sont employés,
viii. la quantité de tensioactif est choisie de telle sorte que la concentration micellaire critique (cmc) du tensioactif n'est pas dépassée dans la phase aqueuse de la miniémulsion H/E contenant le monomère A,
ix. la valeur de pH de la phase aqueuse A est fixée avantageusement pour la polymérisation radicalaire par l'utilisation des substances tampons, comme par exemple l'hydrogénocarbonate de sodium,
x. la phase monomère A et la phase aqueuse A sont amenées à une température entre 25 et 100 °C, de préférence entre 30 et 60 °C avant l'union à une macroémulsion H/E, et/ou
xi. le contenu de matière solide de la dispersion aqueuse obtenue après la fin de la polymérisation est de 10 à 70 % (m/m), de préférence 20 à 60 % (m/m), en particulier 30 à 50 % (m/m).

7. Procédé selon au moins l'une des revendications 4 à 6, **caractérisé en ce que**
i. les particules polymères selon au moins l'une des revendications 1 à 3 sont extraites de la phase aqueuse après la fin de la polymérisation par une séquence consistant en une précipitation ou coagulation, une filtration, un lavage et un séchage,
ii. les particules polymères selon au moins l'une des revendications 1 à 3 sont précipitées ou coagulées après la fin de la polymérisation par l'ajout de sels contenant des cations plurivalents comme par exemple Ca²⁺, Mg²⁺ ou Al³⁺,
iii. les particules polymères selon au moins l'une des revendications 1 à 3 sont coagulées après la fin de la polymérisation par congélation à des températures entre 0 et -40 °C, de préférence entre -10 et -30 °C,
iv. les particules polymères selon au moins l'une des revendications 1 à 3 sont extraites de la phase aqueuse après la fin de la polymérisation par coagulation, déshydratation et dégazage à l'aide d'une extrudeuse à vis, et/ou
v. les particules polymères selon au moins l'une des revendications 1 à 3 sont coagulées après la fin de la polymérisation dans une unique étape de procédé à l'aide d'une extrudeuse à vis, déshydratées, dégazées et mélangées avec une pâte de moulage comme résine matrice.

8. Plastique, **caractérisé en ce qu'**il contient, par rapport à sa masse totale,
a. 1 à 80 % (m/m) de particules polymères selon au moins une des revendications 1 à 3,
b. 20 à 99 % (m/m) d'une matrice, constituée de
i. 50 à 100 % (m/m) d'au moins une résine matrice et
ii. 0 à 50 % (m/m) d'adjuvants supplémentaires, comme par exemple des lubrifiants, des agents anti-bloquants, des agents de démoulage, des dispersants, des antistatiques, des agents ignifuges, des pigments, des agents de modification de résilience, des plastifiants, des agents liants, des charges, des agents de renforcement, des propulseurs et des stabilisants, comme des antioxydants, des photoprotecteurs, des thermoprotecteurs.

9. Plastique selon la revendication 8, **caractérisé en ce qu'**il affiche, formé en une plaque ou une feuille plastique avec une épaisseur de 2 mm, dans une plage de température de -20 à 150 °C, une modification de la transmission lumineuse totale selon DIN EN 410 d'au moins 5 % par rapport à la transmission lumineuse totale maximale de la plaque ou feuille plastique.

10. Plastique selon au moins l'une des revendications 8 et 9, **caractérisé en ce qu'**une pâte de moulage thermoplastique issue du groupe des homo- et copolymères standard de polyéthylène (p. ex. PE-LD, PE-HD), des copolymères d'éthylène (PE-ULD, PE-VLD, EVA, EVOH, EBA, EEAK, EMA, EAMA, COC, EIM), des polypropylènes (PP), des polymères de styrène (PS, ABS, SAN), des polychlorures de vinyle, des poly(butyral de vinyle) (PVB), des polyuréthanes thermoplastiques (TPU), des homo- et copolymères de polyméthacrylate ou leurs transformations résilientes (PMMA, AMMA, MBS, MABS,PMMI, PMMA-HI), des polyamides (PA), des polycarbonates (PC) et des mélanges PC, des polyesters de l'acide téréphtalique (PET, PBT) et de leurs mélanges, des polyarylsulfones (PSU), des polyéthersulfones (PES) et des dérivés de cellulose (CA, CAB, CAP), est utilisée comme résine matrice, en particulier
**en ce qu'**une pâte de moulage thermoplastique issue du groupe : des polyméthacrylates de méthyle (PMMA), des variantes résilientes du PMMA (PMMA-HI), des copolymérisats de méthacrylate de méthyle (AMMA), des poly-N-méthylméthacrylimides, des polyamides transparents (PA) à base d'acides dicarboxyliques aromatiques ou de diamines aliphatiques ramifiées ou acycliques, des polyamides transparents (PA) à base d'acides dodécanedioïque et d'une diamine cycloaliphatique, des polycarbonates (PC) à base de bisphénol A, des poly(téréphtalates d'éthylène) (PET), des polystyrènes (PS), des poly(butyral de vinyle) (PVB) et des polyuréthanes thermoplastiques (TPU), est utilisée comme résine matrice.

11. Plastique selon au moins l'une des revendications 8 et 9, **caractérisé en ce que** des pâtes de moulage durcissables et des résines de coulée ou de stratification, telles que des résines formaldéhyde transparentes ou translucides, des résines polyester insaturées, des résines époxy, des résines silicone, des résines phtalate de diallyle et carbonate de diallyldiglycol, sont utilisées comme précurseurs pour la résine matrice et/ou **en ce que** des mélanges thermodurcissables de prépolymères de polyméthacrylate de méthyle, de méthacrylate de méthyle, d'au moins un initiateur radicalaire de polymérisation et, le cas échéant, un comonomère (de réticulation), sont utilisés comme précurseurs pour la résine matrice.

12. Procédé de fabrication d'un plastique selon au moins l'une des revendications 8 à 10, **caractérisé en ce que** les particules polymères selon au moins l'une des revendications 1 à 3 sont mélangées avec la matrice par combinaison, en particulier dans une extrudeuse ou un malaxeur.

13. Procédé selon la revendication 12, **caractérisé en ce que** le plastique selon au moins l'une des revendications 8 à 10 est ensuite mis en forme par un procédé adapté, comme par exemple l'extrusion, le calandrage, l'extrusion soufflée, le moulage par injection, l'injection-compression, le moulage par injection et soufflage et le pressage, en corps conformés tels que des plaques massives, des plaques alvéolées, des plaques ondulées, des films, des tiges, des tubes ou d'autres corps conformés et/ou est ensuite lié à d'autres matériaux comme des verres, des plastiques, des bois, des métaux et apparentés par coextrusion, moulage par injection de composants multiples, collage, laminage, moulage, injection, raclage, remplissage et apparentés.

14. Procédé de fabrication d'un plastique selon au moins l'une des revendications 8, 9 et 11, **caractérisé en ce que** les particules polymères selon au moins l'une des revendications 1 à 3 sont mélangées avec le précurseur durcissable de la résine matrice et sont durcies en pièces de plastique, comme par exemple des plaques, des films et apparentés, ou en matériaux composites, comme par exemple des verres feuilletés.

15. Application du plastique selon au moins l'une des revendications 8 à 11 à la fabrication de corps conformés et de pièces de plastique, tels que des plaques massives, des plaques alvéolées, des plaques ondulées, des films, des tiges, des tubes et apparentés, en particulier pour le vitrage de bâtiments, de véhicules, de vérandas et de serres, pour les façades en verre, les éléments de façades en verre et les murs-rideaux ; pour le verre de protection solaire et le verre de protection solaire à guidage de lumière ; pour le verre isolant, le verre athermique et les plaques isolantes ; pour le verre feuilleté, le verre feuilleté de sécurité et le verre feuilleté insonorisé ; pour les abris de voiture, les vitrages de balcon, les maisons de verre, les auvents de terrasse, les vitrages et les toits de piscine ; pour les vitrages de toit, les verrières et les vitrages d'impostes ; pour les vitrages industriels ; pour les composants lumineux, les puits de lumière, les chemins lumineux et les voûtes en berceau ; pour le verre profilé, les vitrage creux et les panneaux ; pour l'isolation thermique transparente ; comme plaques couvrantes pour les collecteurs solaires et les modules photovoltaïques ; pour les films et les vernis de protection solaire; pour les films agricoles et de serres ; comme films laminés pour le verre feuilleté, à titre d'exemple ; pour les vitrages intérieurs, les murs de séparation, les cloisons, les cabines de douche, les portes vitrées et les portes vitrées coulissantes ; pour le verre décoratif ; pour les caches de luminaires, les abat-jours, les réflecteurs et les fibres optiques ; pour les lentilles optiques et les verres de lunettes ou leurs revêtements ; pour la publicité lumineuse et les enseignes lumineuses ; pour les panneaux de signalisation et d'information et pour les emballages.
